# EUROPEAN PATENT SPECIFICATION

(11) **EP 2 681 133 B1**
(45) Date of publication and mention of the grant of the patent: **24.02.2016**
(21) Application number: 11743376.3
(22) Date of filing: 20.07.2011
(51) Int. Cl.: A23F 5/26, B65D 85/804

(54) **CAPSULE**
KAPSEL
CAPSULE

(30) Priority: 03.03.2011 NL 2006338; 11.03.2011 NL 2006369; 11.03.2011 NL 2006368; 12.05.2011 NL 2006772; 20.06.2011 WO PCT/NL2011/050442; 20.06.2011 WO PCT/NL2011/050443
(43) Date of publication of application: 08.01.2014
(73) Proprietor: Biserkon Holdings Ltd., 1307 Nicosia (CY)
(72) Inventor: ZWEED, Sander, Gordon, NL-1401 VJ Bussum (NL); KLEP, Mark, Eric, Anton, Arthur, NL-4281 NJ Andel (NL); ANDREAE, Jan, NL-1261 XE Blaricum (NL)
(74) Representative: Langenhuijsen, Bastiaan Wilhelmus Herman
(86) International application number: PCT/NL2011/050528
(87) International publication number: WO 2012/144885

(56) References cited:
- EP-A1- 1 849 715
- CH-A5- 605 293
- DE-U1-202009 009 127
- DE-U1-202009 014 945

## Description

The invention relates to a capsule for use in a device for preparing beverages. The invention also relates to an assembly of such a capsule and a device for preparing beverages. In addition, the invention relates to a perforation structure evidently intended for use in such a capsule according to the invention. The invention also relates to the use of such a capsule in a device for preparing beverages. The invention further relates to a sealing element for use in a capsule according to the invention.

Diverse capsules for use in a device for preparing beverages are known in the prior art. A known capsule as described for instance in EP 0512468 comprises a housing provided with a perforable supply side for injecting a liquid into the housing and with a discharge side located at a distance from the supply side and provided with an opening for the purpose of discharging liquid injected into the housing, a quantity of substance for extraction received in the housing, such as ground coffee beans, and a pierceable foil connected to the housing and sealing the opening located on the discharge side. This known capsule can be placed in a device for preparing a beverage. The capsule is placed for this purpose in a receiving space of a capsule holder of the device. The capsule is clampingly supported here in the receiving space by a support and a clamp. The supply side of a housing of the capsule is perforated by subsequently moving a liquid injector through the housing of the capsule, and a relatively hot liquid, in particular water, can be introduced into the housing under a relatively high pressure, generally of between 15 and 20 bar. The foil is perforated by moving a perforation plate forming part of the capsule holder and the capsule toward each other and the extracted liquid flows via the perforation plate into a beverage container. Because of the relatively high operating pressure a space between the capsule and capsule holder will generally be filled with a sealing element. In the case the sealing connection does not function in the correct manner and water flows outside the capsule, insufficient pressure will be developed inside the capsule to cause tearing of the foil or the pressure will not tear the foil completely, and this can impede the extraction process considerably. It is possible here to envisage providing the capsule holder with a sealing element in order to realize sealing. It is however generally more advantageous to provide the capsule with a sealing element, whereby the sealing element is used only once, whereby improved operation of the sealing element can be guaranteed. The European patent EP 1654966 describes a capsule which is provided on an outer side with a sealing element manufactured from a rubber-elastic material. Although the material properties of rubber-elastic materials are favourable for sealing engagement on the capsule holder, such rubber-elastic materials are found to be relatively difficult to produce, and it is moreover relatively difficult to attach the rubber-elastic sealing element to the capsule by means of welding. If the sealing element is insufficiently adhered to the capsule during welding, one or more leakages can occur between the sealing element and the capsule, which can result in leakage(s) during the extraction process.

An object of the invention is to provide an improved capsule with which at least one of the above stated drawbacks can be obviated.

A further object of the invention is to provide a capsule with an alternative sealing element.

The invention provides for this purpose a capsule of the type stated in the preamble, comprising: a housing at least partially filled with a substance to be extracted and/or dissolved, such as ground coffee, wherein the housing is provided with a supply side for pressing a liquid such as water into the capsule, and with a discharge side located a distance from the supply side for discharging liquid provided with extract and/or dissolved substance and guided through the capsule, wherein at least a part of the discharge side of the housing is initially sealed by a perforable foil; a laterally protruding engaging edge connected to the housing to enable clamping of the capsule in a device for preparing beverages; and at least one at least partially resilient sealing element for sealing a space between the device and the capsule during clamping of the capsule in the device, the sealing element being at least partially manufactured from a thermoplastic polyolefin (TPO). The advantage of a TPO is that a TPO is also flexible but, in contrast to a rubber elastomer, comprises relatively few cross-links, whereby a TPO softens considerably more at increased temperature (welding temperature) than a rubber elastomer which is of thermosetting character and does not soften, or hardly so, due to a large number of cross-links. This more intensive softening enables better fusing of the sealing element with another part of the capsule during a (thermal or ultrasonic) welding process, whereby the forming of gaps between the sealing element and another part of the capsule can be prevented, this enhancing the eventual extraction process. It is particularly advantageous here for the capsule part to which the sealing element is connected to be manufactured from plastic, and preferably a polyolefin such as polypropylene, which enhances the mutual fusing during welding, and therefore the mutual adhesion of the two components. Welding is otherwise preferred to adhesion, since no additional adhesive means are required, this being particularly advantageous from an economic and logistic viewpoint and from the viewpoint of environmental-friendliness. A further advantage of applying a TPO is that manufacture of a TPO is quicker and easier than that of a thermosetting elastomer (rubber elastomer) which is manufactured in three lengthy steps (mixing, injection moulding and cross-linking). Other than thermosetting polymers, TPOs can moreover be wholly or partially recycled, this being particularly advantageous from the viewpoint of environmental-friendliness.

The capsule can comprise one or more sealing elements. When the capsule comprises a plurality of sealing elements, it is then possible to envisage the sealing elements engaging each other and optionally being connected to each other, in particular by means of a weld connection. It is however also possible here to envisage the sealing elements being positioned at a distance from each other, wherein for instance one sealing element is connected to and/or forms part of the engaging edge and another sealing element is connected to and/or forms part of the housing, whereby a multiple seal is realized during the extraction process of the capsule placed and clamped in a capsule holder. The one or more sealing elements will generally be positioned on an outer side (i.e. a side facing toward the device) of the housing and/or the engaging edge.

The TPO from which the sealing element is at least partially manufactured preferably comprises polypropylene. Since the housing and/or a part of the foil facing toward the sealing element is generally also manufactured from polypropylene, an excellent welded connection can be realized between the sealing element on the one hand and the housing and/or the foil on the other. The sealing element more preferably comprises a composition of polyolefins, the composition comprising: polypropylene and an elastomeric copolymer comprising units of ethylene and units of an ∀-olefin. The V-olefin is more preferably formed here by ethylene, propylene or 1-butene.

In a particular preferred embodiment the TPO is formed by a polyolefin composition, comprising: A) 20-50 parts by weight of a crystalline polypropylene polymer with an isotacticity index higher than 80 which is selected from a polypropylene homopolymer and polypropylene copolymers comprising 0.5 to 15 mol% ethylene and/or an ∀-olefin with 4 to 10 carbon atoms, wherein the polypropylene polymer has a molecular weight distribution (MWD) greater than 3.5; and B) 50-80 parts by weight of an elastomeric ethylene copolymer with olefins CH₂=CHR, wherein R is an alkyl with 1 to 10 carbon atoms, which optionally comprises minor quantities of units derived from a polyene, wherein the copolymer comprises 40 to 70% by weight of units derived from ethylene and 30 to 60% by weight of units derived from an ∀-olefin, and has the following characteristics: a) a molecular weight distribution of less than 3.5, b) a crystallinity content, expressed as the enthalpy of fusion, lower than 20 J/g and c) a content of 2-1 regio-inversions of the ∀-olefin units lower than 5%. Further advantageous embodiments are described in EP 0770106, the content of which forms part of this patent specification by way of reference.

In another particular preferred embodiment the TPO is formed by a polyolefin composition, comprising: A) 10-50 parts by weight of a homopolymer of polypropylene with an isotactic index higher than 80 or a copolymer of polypropylene with ethylene, a CH₂=CHR ∀-olefin, wherein R is an alkyl group with 2-8 carbon atoms, or a combination thereof, the copolymer comprising more than 85% by weight polypropylene; B) 5-20 parts by weight of a copolymer fraction comprising ethylene, insoluble in xylene at ambient temperature; C) 40-80% by weight of a copolymer fraction of ethylene and polypropylene or another CH₂=CHR ∀-olefin, wherein R is an alkyl group with 2-8 carbon atoms, or combination thereof with optionally a small quantity of diene which comprises less than 40% by weight ethylene, which fraction is soluble in xylene at ambient temperature and with an intrinsic viscosity of 1.5-4 dl/g; wherein the percentage by weight of the sum of the (B) and (C) fractions in respect of the overall polyolefin composition is 50-90% and the weight ratio(B)/(C) is lower than 0.4, the polyolefin composition being obtainable by applying a polymerization catalyst comprising the reaction product of a solid component comprising a titanium compound and an electron donor compound supporting on magnesium chloride, with an Al trialkyl compound and an electron donor compound. Further advantageous embodiments are described in EP 0770106, the content of which forms part of this patent specification by way of reference.

Examples of commercially available TPOs are Hifax^{®}, in particular Hifax^{®} 7334 XEP, Adflex^{®}, in particular Adflex^{®} X500F, and Softell^{®} obtainable via LyondellBasell. It is otherwise also possible to envisage further providing an outer surface of the capsule with at least one other type of sealing element for the purpose of sealing the capsule in the device.

The housing can be manufactured from diverse materials, including an aluminium and/or plastic, in particular polypropylene (PP). When a plastic housing is applied, the housing will generally be manufactured from a laminate of a plurality of plastic layers, such as PP and ethylene vinyl alcohol (EVOH). When an aluminium housing is applied, it is generally also usual to laminate the aluminium with one or more additional layers, including a protective lacquer coating in order to avoid direct contact of aluminium with the beverage to be prepared, and including for instance a PP layer to enable realization of an (ultrasonic) welded connection to the foil. The foil generally also comprises aluminium which is optionally provided on one or two sides with a PP layer in order to facilitate one or two-sided adhesion of the foil. It is also possible to envisage the foil comprising aluminium oxide (ALOX), optionally laminated with plastic such as polyethylene terephthalate (PET), whereby an exceptionally thin foil can be obtained with a thickness in the order of magnitude of several microns. The foil is generally connected by means of welding and/or adhesion to the engaging edge, in particular to a flange forming part of the housing.

In an embodiment of the capsule the at least one sealing element is arranged releasably round the housing and/or is connected releasably to the engaging edge and/or the housing, whereby it is not necessary to modify the production lines for the capsules, this being particularly advantageous from an economic viewpoint. The type, in particular the thickness, of the sealing element to be applied can moreover be adapted to the (most likely) device in which the capsule is going to be used. The arranging of the sealing element can take place by machine during the production process. It is however also possible to envisage this arrangement taking place manually, optionally by the consumer him/herself, whereby he/she can have the type of sealing element to be applied depend on the type of device (coffee machine) the consumer in question is using. A further advantage of the sealing element is that the choice of material and shape can be optimized in relatively simple manner for the purpose of realizing a liquid-tight in particular medium-tight, seal during the preparation process. The sealing element arranged releasably round the housing will generally exert a bias on an outer side of the housing, whereby undesirable removal of the sealing element from the housing can be countered as far as possible. It is also possible to envisage having the sealing element held by the engaging edge and/or the housing, for instance by applying holding elements such as hooks or other locking protrusions.

The sealing element will generally wholly enclose the housing of the capsule and can for instance take the form of an O-shaped or L-shaped ring. It is also possible to envisage the sealing element enclosing the engaging edge multilaterally, whereby a multilateral, particularly two-sided seal can be realized.

In a preferred embodiment the capsule comprises a perforation structure coupled substantially rigidly to the engaging edge and/or the housing and/or the foil and provided with at least one perforation element facing toward the foil for perforating the foil, which perforation structure is positioned substantially on a side of the foil remote from the housing, wherein perforation of the foil is caused by deformation of the foil during pressing of the liquid through the capsule. By providing the capsule with its own perforation structure for perforating the foil a conventional perforation plate forming part of the device is no longer required. The advantage hereof is that the prepared beverage need no longer be pressed through the conventional perforation plate of the device, but can optionally be delivered directly from the capsule to a drinking cup. This can drastically reduce the beverage residue left behind in the device, this being advantageous from a hygiene viewpoint and reducing the required maintenance on the device. It is moreover possible in this way to prevent, or at least counter, beverage pressed out of the capsule mixing with beverage residues coming from one or more already used capsules and already present in the device, whereby the taste of the beverage to be prepared can be guaranteed as fully as possible. The perforation structure will be connected substantially rigidly (non-displaceably) to the housing, whereby the external dimensioning of the capsule must generally be smaller than or the same as a volume enclosed by the capsule holder. The perforation structure will generally be provided with one or more throughflow channels or throughfeed openings extending between a side of the perforation structure facing toward the foil and a side of the perforation structure remote from the foil. The particular advantage here is that the number of throughflow channels to be applied and the dimensioning of these throughflow channels can be wholly adapted to the nature of the beverage to be prepared, wherein the intensity of the aeration, the extent of the pressure buildup and the swirling of the beverage pressed out of the capsule can be regulated, which can considerably enhance the taste sensation during consumption of the beverage. Because the foil will be perforated by the generally pointed perforation elements and will be pressed during use against the perforation structure, a filtering action will be realized, whereby solid constituents such as coffee dregs can be kept in the housing. The supply side will otherwise generally take a closed form initially, wherein the supply side will be perforated in the device during use. It is also possible to envisage the supply side already being pre-perforated during the production process, whereby further perforation in the device can be dispensed with. The drawback hereof is however that the capsule generally has to be packaged in order to enable a sufficiently long shelf-life of the substance, and therefore of the capsule. Initial, substantially hermetic sealing of the capsule is generally recommended, wherein the capsule can optionally be filled with an inert gas, such as nitrogen or carbon dioxide, in order to further increase the shelf-life of the substance. The result hereof is that a slight overpressure of several hundred millibar will generally be present in the capsule. This overpressure can possibly increase to some extent if coffee powder, which naturally generates a limited amount of gas, is received in the capsule.

The perforation structure usually takes a plate-like form in order to limit the volume taken up by the capsule. The perforation structure is preferably positioned at least partially in a volume enclosed by the housing. The advantage hereof is that the dimensioning of the housing need not be adapted to the standard dimensioning of a capsule and capsule holder, this being advantageous from an economic point of view. It is advantageous here for the perforation structure to connect substantially seamlessly to the engaging edge, wherein the perforation structure can even form an integral part of or be integrally connected to at least a part of the engaging edge. It is a further advantage that a side of the perforation structure remote from the foil and a side of the engaging edge are located in the same plane, so that a completely flat underside of the capsule can in fact be realized. The housing and the perforation structure are generally positioned initially on either side of a plane defined by (a central part of) the foil. A suitable material for a perforation structure is plastic, such as for instance PP or polyethylene (PE).

The engaging edge generally comprises at least one flange connected integrally to the housing. It is also possible to envisage the flange being chemically and/or mechanically connected to an inner side and/or outer side of the housing. The engaging edge will usually be constructed in laminated manner from at least one flange connected to the housing and a support structure coupled to the flange, the support structure being optionally integrally connected to the perforation structure. An edge periphery of the perforation structure is optionally connected via at least one connecting element to the engaging edge. The support structure will generally take a substantially annular form here, because the flange will usually have the same shape. It is possible here to envisage the support structure at least partially enclosing, and even being able to clamp, the flange. It is also possible to envisage welding and/or adhering the support structure to the flange, usually with interposing of the foil. The support structure can be constructed from a plurality of parts which are mutually connected during the production process, for instance by means of welding or adhesion.

The perforation structure and the support structure are preferably manufactured at least partially from the same material, such as polypropylene, in order to enable realization of a reliable mutual connection. As already stated, it is also possible to envisage the perforation structure and the support structure being integrally connected to each other and being manufactured in the same production step, for instance by means of injection moulding. The support structure can here in fact be deemed as an (integral) extension of the perforation structure. The support structure is preferably constructed here from a lower part initially connected directly to the perforation plate and an upper part connected to the lower part, wherein the lower part and the upper part are at least positioned at least partially on either side of the flange connected to the housing or forming part of the housing, whereby the flange is at least partially covered on an underside and an upper side by the support structure. The upper part of the support structure can be connected integrally to the lower part of the support structure, wherein the support structure is even manufactured from one material, in particular plastic, preferably polypropylene. The lower part of the support structure will however generally be adapted to initially hold (support) the perforation structure and the upper part of the support structure will generally be adapted as the sealing element manufactured at least partially from TPO. The advantage of a TPO is that a reliable sealing of the capsule in the capsule holder can be realized by means of such a material, wherein a reliable connection can moreover be realized between the lower part of the support structure and the upper part of the support structure.

Instead of connecting the perforation structure rigidly to the engaging edge and/or the housing and/or the foil, it is also possible to envisage the capsule comprising a perforation structure coupled to the engaging edge and/or the housing and provided with at least one perforation element facing toward the foil, this perforation structure being positioned substantially on a side of the foil remote from the housing, wherein the perforation structure is displaceable from a first position, in which the foil is substantially intact, to a second position in which the at least one perforation element perforates the foil, whereby discharge of liquid from the capsule is possible. Displacement of the perforation structure is generally realized by having the capsule clamped by a capsule holder of a device for preparing beverages, a conventional perforation plate forming part of the device no longer being required. In an embodiment the perforation structure is initially connected in the first position via at least one breakable connection to the engaging edge, wherein the perforation structure is displaceable to the second position by breaking the connection between the perforation structure and the engaging edge. In this embodiment the perforation structure will generally take a substantially rigid form. A suitable material for manufacturing such a substantially rigid perforation structure is for instance PP. The perforation structure is preferably initially positioned such that the connection between the engaging edge and the perforation structure will be broken during clamping of the capsule in the device. It is optionally also possible to envisage the connection being broken by the user him/herself by pushing the perforation structure in the direction of the foil. Instead of using a breakable connection it is also possible to envisage providing the engaging edge and/or the housing with a guide for co-action with the perforation structure, whereby the perforation structure can in fact be shifted from the first position to the second position.

In an advantageous embodiment the perforation structure is provided with a plurality of throughflow channels for discharge of liquid, the throughflow channels extending from a side of the perforation structure facing toward the foil to a side of the perforation structure remote from the foil. The perforation structure is generally also provided with a plurality of perforation elements. It is possible here to envisage at least a number of throughflow channels being located at a distance from the perforation elements. It is however also possible to envisage, and even advantageous, for at least one perforation element to be provided with one or more throughflow channels. It is found particularly advantageous in practice to apply a conical perforation element through which extend three throughflow channels which debouch in the cone wall, whereby blocking of the throughflow channels by perforated foil parts can be prevented.

For the purpose of being able to prevent blocking of an outer end of a throughflow channel by the device it is advantageous for a side of the perforation structure remote from the foil to be provided with at least one surface groove, the surface groove connecting to at least one outer end of at least one throughflow channel. It is further possible to envisage a side of the perforation structure remote from the foil being provided with a plurality of surface grooves, the surface grooves connecting the outer ends of the throughflow channels to each other. The surface grooves can connect to each other and intersect each other and in this way form a network.

The perforation elements must be sufficiently sharp to be able to perforate the foil. It is therefore advantageous that at least a number of perforation elements take a pointed, in particular pyramid-shaped and/or cone-shaped form. A cone-shaped (conical) shape is generally recommended above a pyramid-shaped embodiment, since the conical embodiment has a periphery varying less pronouncedly as seen in the height of the perforation elements, whereby the foil will tear and/or deform more gradually and therefore more easily.

An edge part of the perforation structure facing toward the foil is generally provided with one or more perforation elements for realizing an edge perforation in the foil. The perforation element can here form a cutting edge which can extend over the whole or partial edge part of the perforation structure. In addition, it is possible to envisage application of more centrally positioned perforation elements. In order to be able to guarantee a reliable perforation, it is generally advantageous that the foil initially engages under bias on at least one perforation element. This is because sufficient pressure buildup in the housing of the capsule will, as a result of the bias, result relatively quickly in perforation of the foil.

In an advantageous embodiment of the capsule a side of the perforation structure remote from the foil is provided with an upright sealing edge which protrudes in a direction away from the foil. This upright sealing edge provides on the one hand for an improved connection of the capsule to the device, and thereby for an improved sealing.. The application of the upright sealing edge moreover makes the perforation structure stackable (nestable) with another perforation structure, this being particularly advantageous during the production process.

The invention also relates to an assembly of a capsule according to the invention and a device for preparing beverages, which device comprises a capsule holder for receiving the capsule. The capsule holder here preferably comprises a plurality of holder parts which are mutually displaceable between an opened state, in which the capsule can be placed in the capsule holder, and a closed state in which the engaging edge of the capsule is clamped substantially liquid-tightly by the holder parts.

The invention further relates to the use of a capsule according to the invention in a device for preparing beverages.

In addition, the invention relates to a sealing element evidently intended for use in a capsule according to the invention. The sealing element will generally be connected here to another part of the capsule by means of a welded connection.

The invention will be elucidated on the basis of non-limitative exemplary embodiments shown in the following figures. Herein:
figures 1-6 show different views of a first embodiment of a capsule, or part thereof, according to the invention;
figures 7-9 show cross-sections of a capsule according to figures 1-6 in a capsule holder of a device for preparing beverages;
figure 10 is a perspective view of a second embodiment of a capsule according to the invention;
figure 11 shows a cross-section of the capsule according to figure 10 along the line C-C;
figure 12 is a perspective view of the perforation structure of the capsule according to figure 10;
figure 13 shows a cross-section of the piercing element according to figure 12 along the line D-D.
figures 14-19 show different views of a first embodiment of a capsule according to the invention;
figures 20 and 21 show cross-sections of a capsule according to figures 14-19 in a capsule holder of a device for preparing beverages;
figures 22a and 22b show cross-sections of a second embodiment of a capsule according to the invention;
figure 23 is a cut-away perspective view of another capsule according to the invention; figures 24a-24c show different cut-away views of the operation of the capsule according to figure 23;
figure 25 is a detailed perspective view of the piercing element for use in the capsule according to figure 23;
figures 26-28 are perspective views of different other capsules according to the invention;
figure 29 shows a cross-section of yet another capsule according to the invention;
figure 30 shows a cross-section of yet another capsule according to the invention;
figure 31 shows a cross-section of yet another capsule according to the invention; and
figure 32 shows a cross-section of yet another capsule according to the invention.

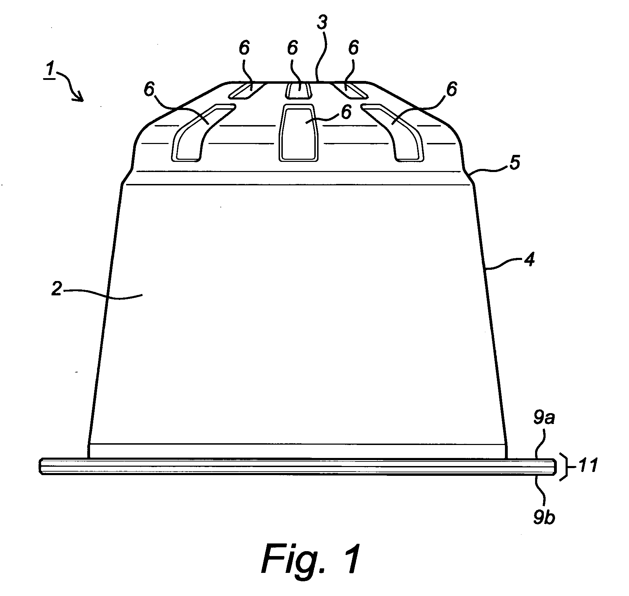

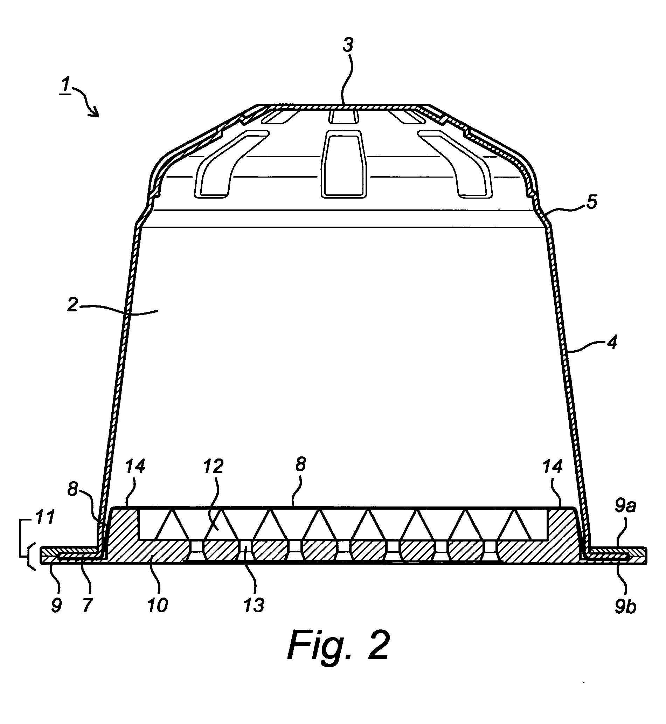

Figure 1 shows a perspective view and figure 2 shows a cross-section of a first embodiment of a capsule 1 according to the invention. Capsule 1 comprises for this purpose a substantially frustoconical (truncated conical) housing 2 at least partially filled with a substance to be extracted and/or dissolved, such as ground coffee, tea, cocoa, milk powder and so on. Housing 2 comprises a perforable upper wall 3 which forms a supply side of capsule 1. The upper wall will be perforated in a capsule holder of a device for preparing beverages, after which water, in practice generally a mixture of water and air, is pressed into capsule 1 at a pressure of between 1 and 20 bar. Housing 2 also comprises a peripheral wall 4 which is integrally connected to upper wall 3 and which tapers to some extent in the direction of upper wall 3, wherein in the shown situation peripheral wall 4 encloses an angle with the vertical lying between 5° and 7°, this angle of inclination corresponding to the complementary angle of inclination of a number of capsule holders available on the market, whereby the volume of housing 2 can be maximized. Peripheral wall 4 is provided with a ridge 5 to enable better fitting of capsule 1 on many of the known capsule holders. Housing 2 further comprises a plurality of strengthening elements 6 arranged recessed into upper wall 3 and/or peripheral wall 4. Strengthening elements 6 resist deformation of housing 2 as much as possible during use. In addition, housing 2 comprises a flange 7 which is integrally connected to the peripheral wall (see figure 2) and which as such forms part of an engaging edge 14 of capsule 1, this engaging edge 14 being adapted to allow clamping of capsule 1 by the capsule holder. An inner edge of flange 7 does in fact define (a part of) the discharge side of capsule 1, this discharge side being initially sealed substantially medium-tightly by a foil 8 connected to flange 7. The connection between flange 7 and foil 8 is preferably realized by means of (ultrasonic) heat welding, whereby a relatively reliable connection can be realized between flange 7 and foil 8. It is advantageous here for the contact surfaces for fusing together to be manufactured from the same material, such as PP. Flange 7 is clamped by and/or enclosed by and/or connected to a support structure 9 for a plate-like perforation structure 10. In this exemplary embodiment support structure 9 is connected integrally to perforation structure 10. Support structure 9 has a modular construction of an upper part 9a and a lower part 9b connected, preferably welded, to upper part 9a. Upper part 9a of support structure 9 is manufactured at least partially from a TPO such as Hifax^{®}, in particular Hifax^{®} 7334 XEP, Adflex^{®}, in particular Adflex^{®} X500F, and Softell^{®} obtainable via LyondellBasell, the upper part 9a in principle being adapted to seal capsule 1 in the capsule holder, while lower part 9b of support structure 9 is in principle adapted to initially hold perforation structure 10. Upper part 9a and lower part 9b can optionally be connected as separate elements to flange 7. As shown in figure 2, perforation structure 10 is substantially wholly enclosed by a volume enclosed by housing 2, wherein housing 2 and perforation structure 10 are separated by foil 8. In this exemplary embodiment perforation structure 10 comprises a plurality of perforation elements 12.

All perforation elements 12 are embodied pyramid-shaped and have a pointed outer end directed toward foil 8 and are adapted to perforate foil 8. Between perforation elements 12 are throughflow channels 13 extending from an upper side of perforation structure 10 to an underside of perforation structure 10 in order to enable discharge of water enriched with the substance, i.e. the prepared beverage, in capsule 1. As shown in figure 2, the diameter of throughflow channels 13 increases to some extent in the direction of an underside of perforation structure 10, this enhancing discharge of prepared average from capsule 1 as well as aeration of the beverage. Also shown is that an underside of perforation structure 10 takes a substantially flat form and also defines an underside of capsule 1. The underside of perforation structure 10 and an underside of engaging edge 11 moreover lie in the same plane, this enhancing handling (storage, transport and use) of capsule 1. In the shown initial situation foil 8 engages on substantially all perforation elements 12, such however that foil 8 remains intact (closed). Figure 2 further shows that perforation structure 10 comprises an upright peripheral edge 14 which is located in housing 2 which protrudes just as far as perforation elements 12 and which can be used to attach foil 8 thereto, whereby foil 8 no longer need be connected to flange 7, which can be advantageous from a structural viewpoint.

During clamping of the capsule in a capsule holder upper wall 3 of capsule 1 will generally be perforated by one or more cutting elements forming part of the capsule holder, after which, during the preparation process, water - and generally air - will be pressed into the capsule at a pressure of between 1 and 20 bar, whereby foil 8 is pressed against perforation elements 12, whereby foil 8 will be perforated. The assembly of perforated foil 8 and perforation structure 10 will act here as filter, wherein beverage will be allowed through and solid parts, in particular residue, will be held back.

During the clamping particularly engaging edge 11 of capsule 1 is clamped in order to realize a seal between capsule 1 and the capsule holder. It is advantageous here for upper part 9a of support structure 9 to be manufactured from a TPO. A reliable seal of the capsule in the capsule holder is realized by the thermoplastic character of the material of upper part 9a of support structure 9. Other than conventional thermosetting elastomers (rubber elastomers), thermoplastic polymers are manufactured using equipment suitable for processing resins. Thermoplastic polymers are quicker and easier to manufacture than thermosetting elastomers, which are manufactured in three lengthy steps (mixing, injection moulding and cross-linking). Other than thermosetting polymers, thermoplastic polymers can moreover be fully or partially recycled. Since lower part 9b of support structure 9 is generally manufactured at least partially from PP and ultrasonic welding is recommended to mutually connect lower part 9b and upper part 9a, it is advantageous for a thermoplastic polypropylene-based elastomer to be applied, such as Adflex®, in particular Adflex® X500F.

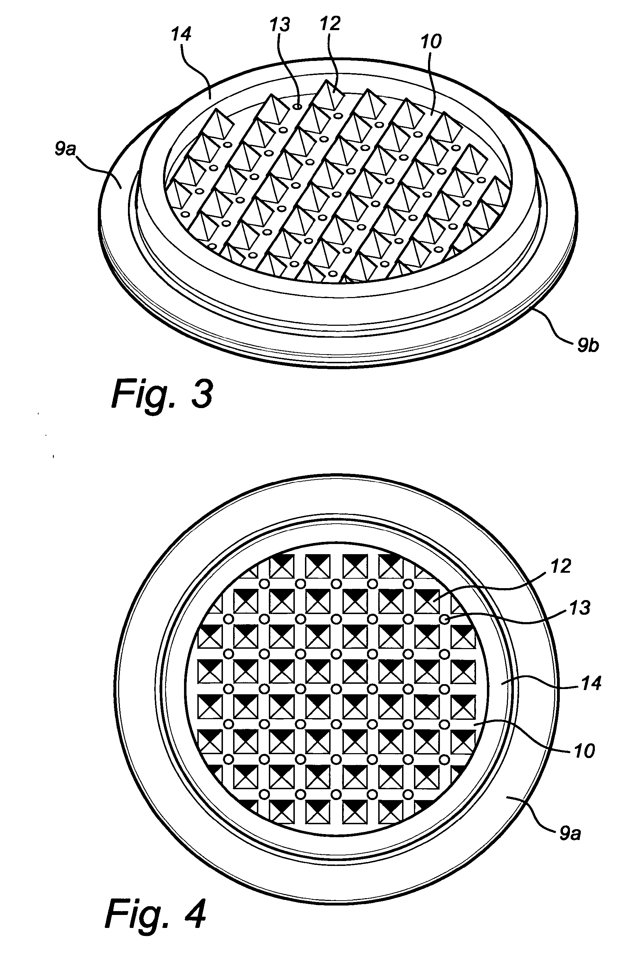

Figure 3 is a perspective view and figure 4 is a top view of the assembly of support structure 9 and the perforation structure 10 connected (integrally) to support structure 9. Figure 3 shows that perforation elements 12 take a pyramid-shaped form. Cone-shaped (conical) perforation elements can optionally be used instead, which can also be advantageous. Throughflow channels 13 are positioned between perforation elements 12. Perforation elements 12 can optionally be provided with throughflow channels. Figure 4 shows the regular arrangement of perforation elements 12 and the throughflow channels 13 located therebetween. The size and positioning of throughflow channels 13 and the number of throughflow channels 13 can be adapted to the nature of the beverage to be prepared. The pressure buildup in the capsule can for instance be increased by making throughflow channels 13 smaller, whereby more substance will generally be carried by the water, this resulting in a stronger beverage. Engaging edge 14 of perforation structure 10 can be adapted to engage with clamping fit or under bias on an inner side of housing 2, whereby an improved edge seal can be obtained between housing 2 and perforation structure 10, whereby water is forced to leave capsule 1 via throughflow channels 13. Instead of using the above stated edge seal, it is also possible to envisage connecting the perforation structure 10 and/or the support structure 9 connected (integrally) thereto to housing 2, in particular to the flange 7 forming part of housing 2, for instance by means of welding and/or adhesion.

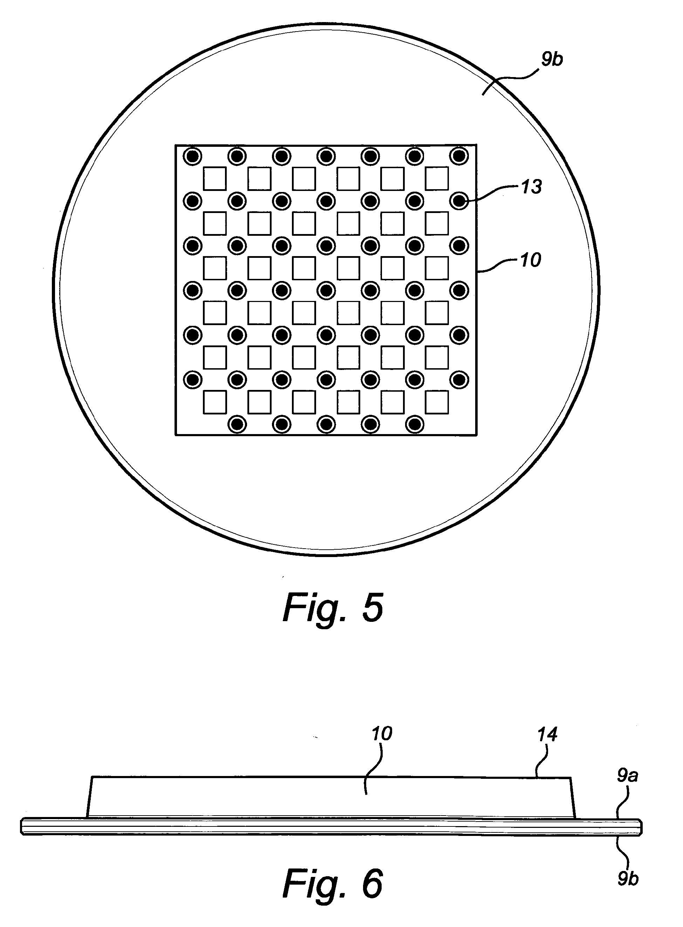

Figure 5 is a bottom view of capsule 1, which shows that the diameter of throughflow channels 13 increases in the direction of the underside of perforation structure 10. The underside of perforation structure 10 can optionally be provided with a network of surface grooves mutually connecting the lower outer ends of throughflow channels 13, whereby possible sealing of throughflow channels 13 by the capsule holder, and thereby blockage of capsule 1, can be prevented. Figure 6 is a side view of the assembly according to figures 3-5, showing particularly that perforation elements 12 protrude no further than engaging edge 14 of perforation structure 10.

In the shown first embodiment of capsule 1 according to the invention the following product specifications can be applied. In the case a plastic housing 2 is applied, the wall thickness thereof can vary and be adapted to the functionality of the relevant part of housing 2. The thickness of flange 7 can for instance amount to between 0.30 and 0.6 5 mm, while the thickness of the upper wall amounts to 0.15 mm. A slight overpressure of 200 to 300 mbar is present in capsule 1 so that deformation of capsule 1 can be resisted prior to use, foil 8 can be pressed against perforation structure 10 and as much oxygen as possible driven out of capsule 1 during the production process. A typical height of the central perforation elements 12 amounts to between 1 and 2 mm, wherein the length of throughflow channels 13 preferably lies between 0.3 and 0.45 mm. The (narrowest) diameter of throughflow channels 13 amounts to between 0.7 and 0.9 mm. The width of connecting elements 11 amounts in this example to between 1 and 2 mm. The overall thickness of engaging edge 14 amounts to about 1.0 mm, wherein the thickness of flange 7 preferably lies between 0.3 and 0.4 mm, the thickness of foil 8 amounts to about 0.02 mm, the thickness of upper part 9a of support structure 9 amounts to about 0.3 mm and the thickness of lower part 9b of support structure 9 also amounts to about 0.3 mm. Applying the above stated dimensioning results in a capsule with a relatively large internal volume of about 14 cm³.

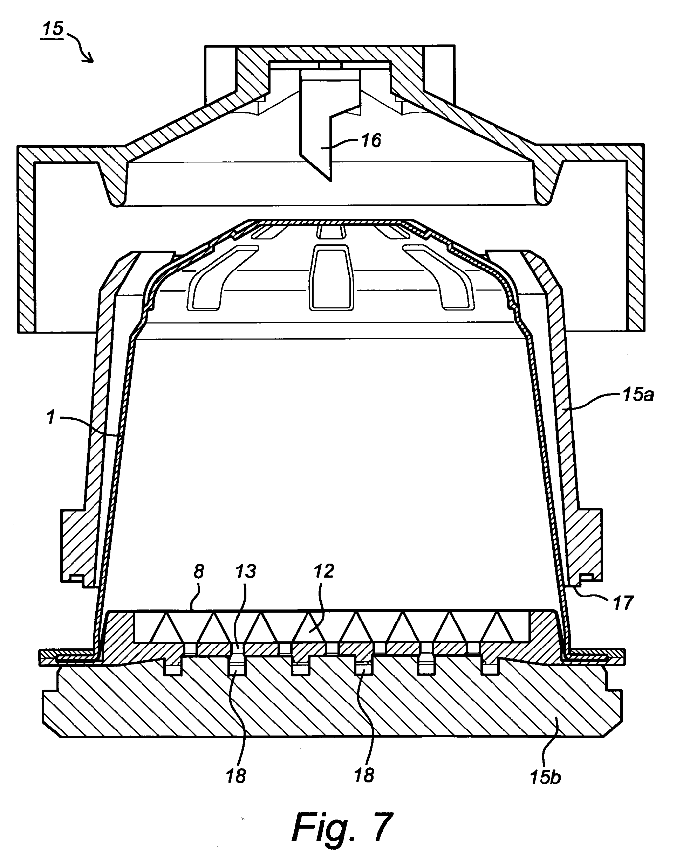

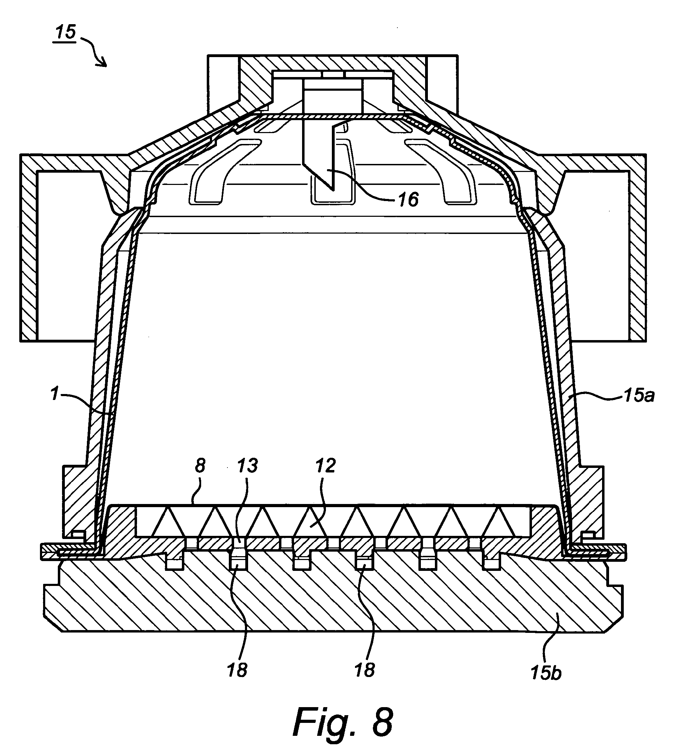

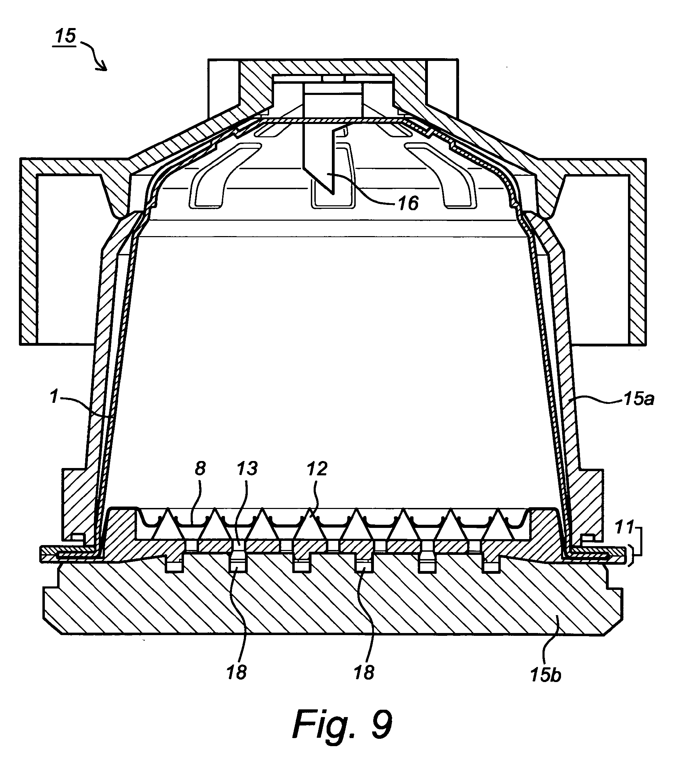

Figures 7-9 show different cross-sections of a capsule 1 as according to figures 1-6 in a capsule holder 15 of a device for preparing beverages such as a coffee machine, in an opened situation prior to use of capsule 1 (figure 7) and in a closed situation in which the beverage can be prepared (figure 8), and in a closed situation in which water is pressed through capsule 1 (figure 9). Capsule holder 15 here comprises a first holder part 15a and a second holder part 15b displaceable relative to first holder part 15a. First holder part 15a comprises one or more cutting elements 16 for perforating upper wall 3 of capsule 1. First holder part 15a further comprises a clamping edge 17 for pressing engaging edge 11 onto second holder part 15b such that capsule holder 15 is sealed substantially completely liquid-tightly, whereby leakage of water via the formed seam can be prevented. Second holder part 15b is provided with one or more discharge openings 18 for beverage. During closing of capsule holder 15 by displacing first holder part 15a and second holder part 15b toward each other the upper wall 3 of capsule 1 will be perforated, and engaging edge 11 will be clamped substantially liquid-tightly between the two holder parts 15a, 15b. Foil 8 will remain intact during this clamping, as also shown in figure 8. Water will then be pressed via the perforated upper wall 3 into capsule 1 at a pressure of between 1 and 20 bar, whereby water comes into contact with a substance received in the housing, such as coffee powder or instant coffee, whereby the water is transformed into coffee. This injection of water into capsule 1 results in a pressure buildup in capsule 1 which is so great that foil 8 will deform in the direction of perforation structure 10 and will be perforated by perforation elements 12, after which the water can be removed from capsule 2 via throughflow channels 13 (see figure 9).

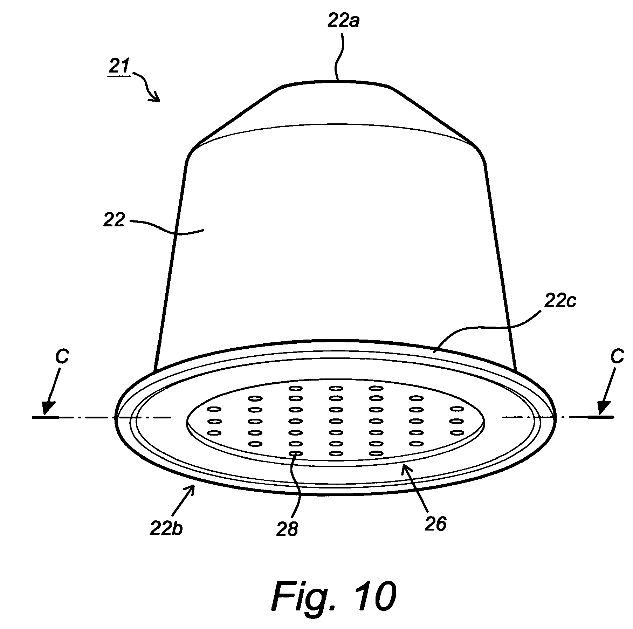

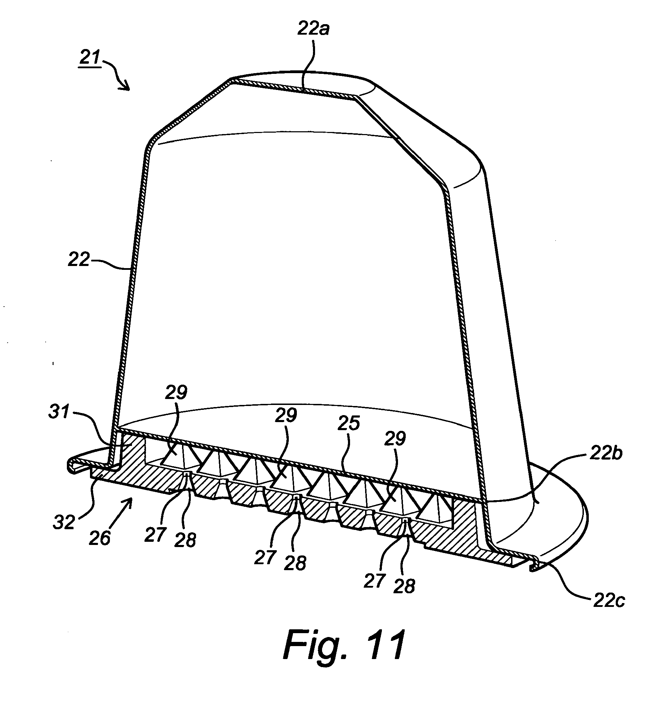

Referring to figure 10, a capsule designated in its entirety with 21 is shown. Capsule 21 comprises a housing 22 manufactured from a plastic. The housing comprises a pierceable supply side for water 22a and a discharge side 22b which is located at a distance from the supply side for water 22a and provided with an opening for discharge of water injected into the housing. The opening on discharge side 22b is sealed by a pierceable, flexible foil 25. On the discharge side housing 22 comprises a support edge 22c, whereby capsule 21 can be placed unambiguously in a device for preparing beverages and does not displace, or hardly so, during use. Capsule 21 will moreover be clamped by the device via support edge 22c. Foil 25 is connected here to housing 22 by means of an adhesive connection or welded connection to support edge 22c and a part of the inner side of housing 22 close to support edge 22c (see also figure 11). The strength of foil 25 and the adhesive connection between foil 25 and housing 22 is sufficiently strong to withstand the force obtained during guiding of water under a pre-known pressure into capsule 21. Housing 22 is connected to a plate-like perforation structure 26. Perforation structure 26 is situated on the side of foil 25 facing toward the outer side of the housing. Perforation structure 26 is provided with a plurality of continuous openings 27 which are distributed over perforation structure 26 and which form an outer end of throughflow channels 28 arranged in perforation structure 26 for discharge of water guided through capsule 21. On the side of perforation structure 26 facing toward the inner side, i.e. the side of perforation structure 26 facing toward the foil, the perforation structure 26 comprises a plurality of protrusions placed distributed over the surface of perforation structure 26 and formed as pyramids 29 (see also figure 11). Pyramids 29 comprised tips 30 for piercing foil 25 from the outer side of capsule 21. Openings 27 are located here between pyramids 29. In the situation shown here foil 25 rests on perforation structure 26. When water is guided under pressure into capsule 21, a force F will be exerted on foil 25, wherein this force will urge foil 25 in the direction of the perforation structure 26 provided with pyramids 29. If this force F exceeds a determined value, the tips 30 of the pyramids will perforate foil 25. Extracted liquid will hereby be guided out of capsule 21 via channels 28 and outside capsule 21. Because capsule 21 comprises its own perforation structure 26, no separate piercing element is required as is necessary with use of the known capsules. This makes the device for preparing a beverage not only simpler, since the beverage can flow directly out of capsule 21 through the openings and channels 28 into a beverage container, the risk of contamination of the device is also reduced. The device hereby requires less maintenance, thereby increasing convenience of use.

Figure 11 shows a cross-sectional view of the capsule according to figure 10 along the line C-C. Although the housing of the capsule 21 shown here is formed as a truncated cone, the housing of the capsule can also be embodied as a cylinder or in other conceivable form.

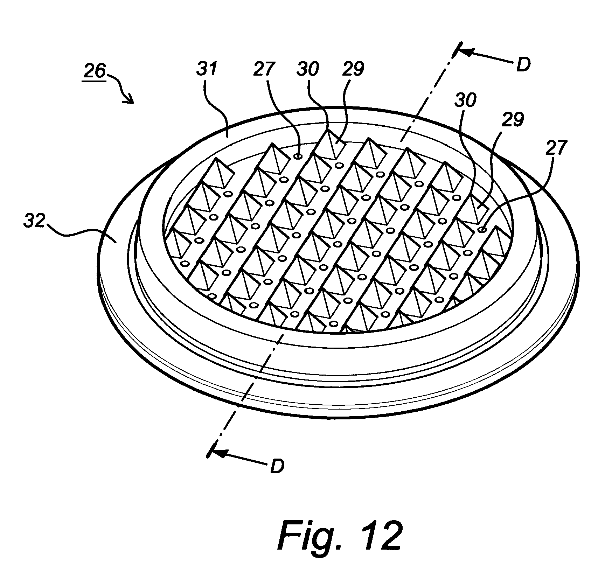

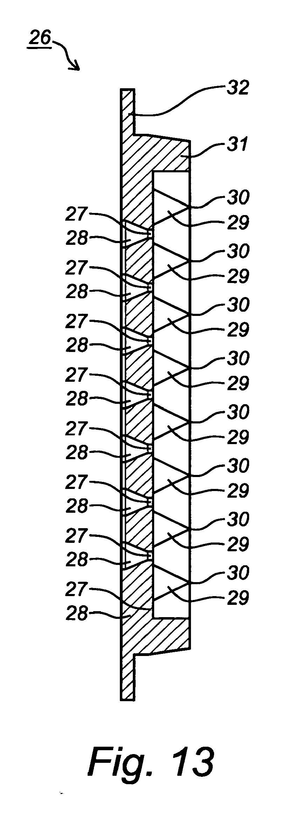

Figure 12 shows the piercing element of capsule 21 according to figure 10 embodied as perforation structure 26. Figure 13 shows a section along line D-D of the piercing element according to figure 12 embodied as perforation structure 26. Perforation structure 26 here comprises a peripheral edge 31 for placing perforation structure 26 in housing 22. Peripheral edge 31 can also be employed for (liquid-tight) attachment of the foil. Perforation structure 26 is also provided with a flange 32 which is connected integrally to peripheral edge 31 and which can be deemed as support structure of perforation structure 26. Perforation structure 26 will be connected here via the flange 32 functioning as support structure to the flange 22c forming an integral part of housing 22.

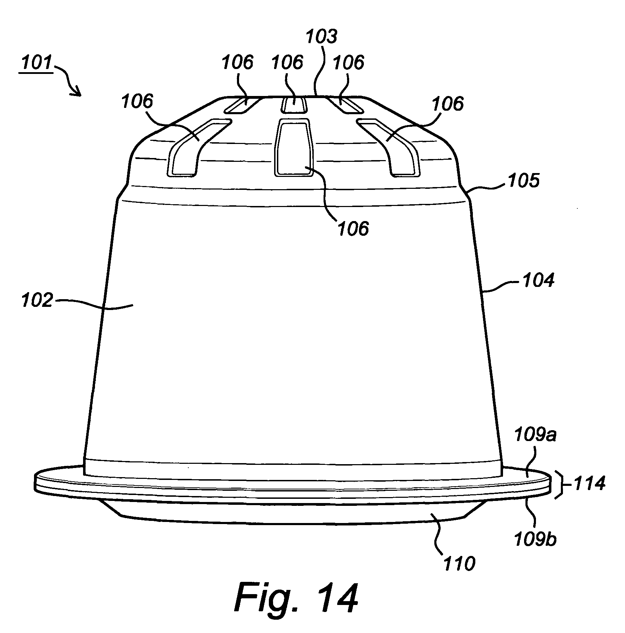

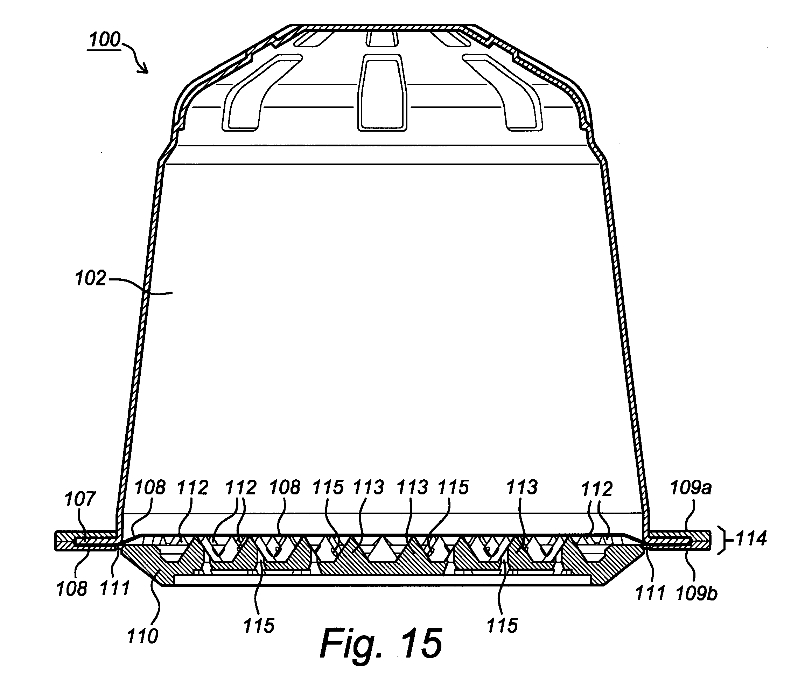

Figure 14 shows a perspective view and figure 15 shows a cross-section of a first embodiment of a capsule 101 according to the invention. Capsule 101 comprises for this purpose a substantially frustoconical (truncated conical) housing 102 at least partially filled with a substance to be extracted and/or dissolved, such as ground coffee, tea, cocoa, milk powder and so on. Housing 102 comprises a perforable upper wall 103 which forms a supply side of capsule 101. The upper wall will be perforated in a capsule holder of a device for preparing beverages, after which water, in practice generally a mixture of water and air, is pressed into capsule 101 at a pressure of between 1 and 20 bar. Housing 102 also comprises a peripheral wall 104 which is integrally connected to upper wall 103 and which tapers to some extent in the direction of upper wall 103, wherein in the shown situation peripheral wall 104 encloses an angle with the vertical lying between 5° and 7°, this angle of inclination corresponding to the complementary angle of inclination of a number of capsule holders available on the market, whereby the volume of housing 102 can be maximized. Peripheral wall 104 is provided with a ridge 105 to enable better fitting of capsule 101 on many of the known capsule holders. Housing 102 further comprises a plurality of strengthening elements 106 arranged recessed into upper wall 103 and/or peripheral wall 104. Strengthening elements 106 resist deformation of housing 102 as much as possible during use. In addition, housing 102 comprises a flange 107 which is integrally connected to the peripheral wall (see figure 15) and which as such forms part of an engaging edge 114 of capsule 101, this engaging edge 114 being adapted to allow clamping of capsule 101 by the capsule holder. An inner edge of flange 107 does in fact define (a part of) the discharge side of capsule 101, this discharge side being initially sealed substantially medium-tightly by a foil 108 connected to flange 107. The connection between flange 107 and foil 108 is preferably realized by means of (ultrasonic) heat welding, whereby a relatively reliable connection can be realized between flange 107 and foil 108. It is advantageous here for the contact surfaces for fusing together to be manufactured from the same material, such as PP. Flange 107 is clamped by and/or enclosed by and/or connected to a support structure 109 for a plate-like perforation structure 110. In this exemplary embodiment support structure 109 here has a modular construction of an upper part 109a and a lower part 109b connected, preferably welded, to upper part 109a. Upper part 109a of support structure 109 is in principle adapted to seal capsule 101 in the capsule holder, while lower part 109b of support structure 109 is in principle adapted to initially hold perforation structure 110. Upper part 109a and lower part 109b can optionally be connected as separate elements to flange 107. Perforation structure 110 is connected by means of a plurality of breakable connecting elements 111 to support structure 109. As shown, housing 102 and perforation structure 110 are positioned on opposite sides of foil 108. In this exemplary embodiment perforation structure 110 comprises a plurality of peripherally oriented ('peripheral') perforation elements 112 and a plurality of more centrally oriented ('central') perforation elements 113. All perforation elements 112, 113 have a pointed outer end directed toward foil 108 and are adapted to perforate foil 108. Most of the central perforation elements 113 are moreover each provided with three throughflow channels 115 extending from an upper side of perforation structure 110 to an underside of perforation structure 110 in order to enable discharge of water enriched with the substance, i.e. the prepared beverage, in capsule 101. As shown in figure 15, all perforation elements 112, 113 protrude equally far, whereby the outer ends of perforation elements 112, 113 form a virtual plane. In the shown initial situation foil 108 engages on substantially all perforation elements 112, 113, such however that foil 108 remains intact (closed). By breaking the connections 111 between support structure 109 and perforation structure 110 the perforation structure 110 can be displaced from an initial position (first position) to a higher position (second position) in which perforation structure 110 at least partially perforates foil 108, whereby the discharge side of capsule 101 is in fact opened, and wherein perforation structure 110 comes to lie at least partially in a space enclosed by housing 102. Breaking the connections 111 can be realized by a user him/herself, but will in practice generally be realized in the capsule holder during closing of the capsule holder, and thereby clamping of capsule 101.

During clamping of capsule 101 in the capsule holder the breakable connection between support structure 109 and perforation structure 110 will in practice generally be broken and perforation structure 110 will be pushed in the direction of foil 108, whereby the peripheral perforation elements 112 will pre-perforate foil 108 and the central perforation elements 113 will not perforate foil 108, or hardly so, because of the loss of foil tension resulting from the peripheral perforation (phase I). In a subsequent brewing process (preparation process) for preparing the beverage, water - and generally air - will be pressed into the capsule at a pressure of between 1 and 20 bar, whereby the peripherally perforated foil 108 is forced against the central perforation elements 113, whereby foil 108 will be further perforated (phase II). The assembly of perforated foil 108 and perforation structure 110 will act here as filter, wherein beverage will be allowed through and solid parts, in particular residue, will be held back.

During the clamping particularly engaging edge 109 of capsule 101 is clamped in order to realize a seal between capsule 101 and the capsule holder. It is advantageous here for upper part 109a of support structure 109 to be manufactured from a TPO. A reliable seal of the capsule in the capsule holder is realized by the thermoplastic character of the material of upper part 109a of support structure 109. Other than conventional thermosetting elastomers (rubber elastomers), thermoplastic polymers are manufactured using equipment suitable for processing resins. Thermoplastic polymers are quicker and easier to manufacture than thermosetting elastomers, which are manufactured in three lengthy steps (mixing, injection moulding and cross-linking). Other than thermosetting polymers, thermoplastic polymers can moreover be fully or partially recycled. Since lower part 109b of support structure 109 is generally manufactured at least partially from PP and ultrasonic welding is recommended to mutually connect lower part 109b and upper part 109a, it is advantageous for a thermoplastic polypropylene-based elastomer to be applied, such as Adflex®, in particular Adflex® X500F.

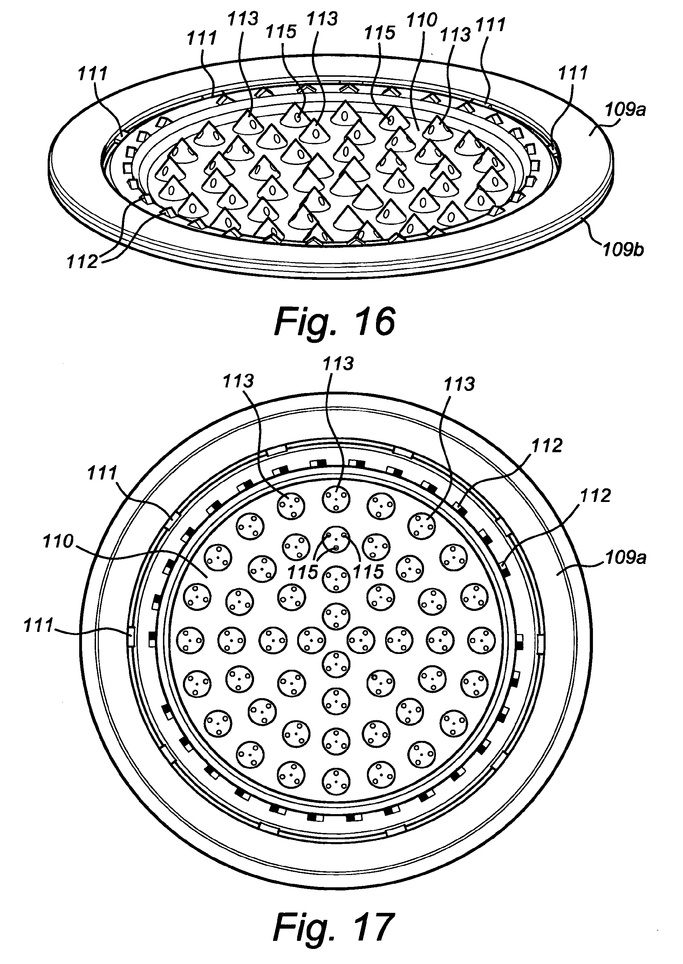

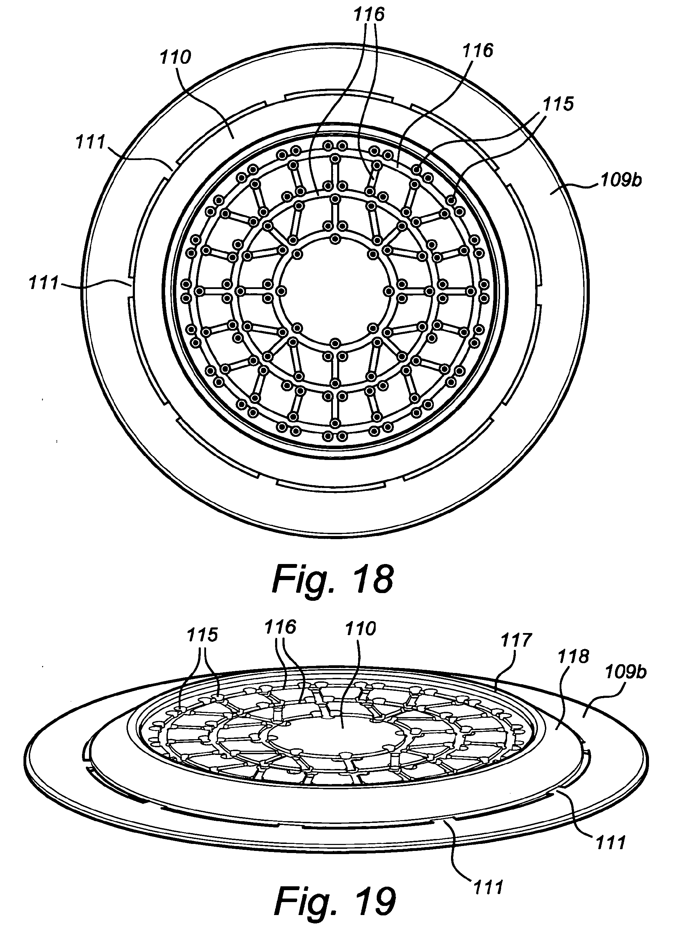

Figure 16 is a perspective view and figure 17 is a top view of the assembly of support structure 109 and the perforation structure 110 releasably connected to support structure 109. Connecting elements 111 for initially connecting support structure 109 and perforation structure 110 decrease in thickness in the direction of perforation structure 110, whereby connecting elements 111 tend to break at the transition surface with perforation structure 110, whereby subsequent displacement of perforation structure 110 can proceed in relatively controlled manner. Also shown is that the central perforation elements 113 take a cone-shaped (conical) form, wherein the most centrally located perforation elements 113 are moreover not provided with throughflow channels 115. The most important reason for this is of a production engineering nature in that this facilitates manufacture of perforation structure 110 by means of injection moulding, this being elucidated in the bottom view of the assembly as shown in figure 18. Because the most centrally located perforation elements 113 are not provided with throughflow channels 115, a central free space is created which is advantageous for injection moulding and displacement of perforation structure 110. Figure 18 further shows that the underside of perforation structure 110 is provided with a network of surface grooves 116 mutually connecting lower outer ends of throughflow channels 115, whereby sealing of throughflow channels 115 by the capsule holder, and thereby blockage of capsule 101, can be prevented. Further shown in the perspective bottom view of figure 19 is that perforation structure 110 is provided with an upright edge 117 adapted on the one hand for sealing connection to the capsule holder, in order to prevent leakage as far as possible, and on the other to make perforation structure 110 stackable (nestable) with another perforation structure 110, this being particularly advantageous from a production engineering viewpoint. Figures 14, 15 and 19 further show that the progression of upright edge 117 to peripheral edge 118 - connected to connecting elements 111 - of perforation structure 110 takes a chamfered form in order to facilitate handling of the capsule in the capsule holder. Instead of a plane chamfering, it is also possible to envisage this chamfering being given a curved form. The external diameter of peripheral edge 118 of perforation structure 110 will otherwise preferably be substantially equal to the largest internal diameter of housing 102, so that perforation structure 110 can be pushed with clamping fit into housing 102. A perforated foil part will usually be clamped here between housing 102 and perforation structure 110, this enhancing the edge sealing of capsule 101, whereby beverage will be discharged from capsule 101 substantially only via throughflow channels 115.

In the shown first embodiment of capsule 101 according to the invention the following product specifications can be applied. In the case a plastic housing 102 is applied, the wall thickness thereof can vary and be adapted to the functionality of the relevant part of housing 102. The thickness of flange 107 can for instance amount to between 0.30 and 0.65 mm, while the thickness of the upper wall amounts to 0.15 mm. A slight overpressure of 200 to 300 mbar is present in capsule 101 so that deformation of capsule 101 can be resisted prior to use, foil 108 can be pressed against perforation structure 110 and as much oxygen as possible driven out of capsule 101 during the production process. A typical height of the central perforation elements 113 amounts to between 1 and 2 mm, wherein the length of throughflow channels 115 preferably lies between 0.3 and 0.45 mm. The (narrowest) diameter of throughflow channels 15 amounts to between 0.7 and 0.9 mm. The width of connecting elements 111 amounts in this example to between 1 and 2 mm. The overall thickness of engaging edge 114 amounts to about 1.0 mm, wherein the thickness of flange 107 preferably lies between 0.3 and 0.4 mm, the thickness of foil 108 amounts to about 0.02 mm, the thickness of upper part 109a of support structure 109 amounts to about 0.3 mm and the thickness of lower part 109b of support structure 109 also amounts to about 0.3 mm. Applying the above stated dimensioning results in a capsule with a relatively large internal volume of between 14.2 and 14.6 cm³.

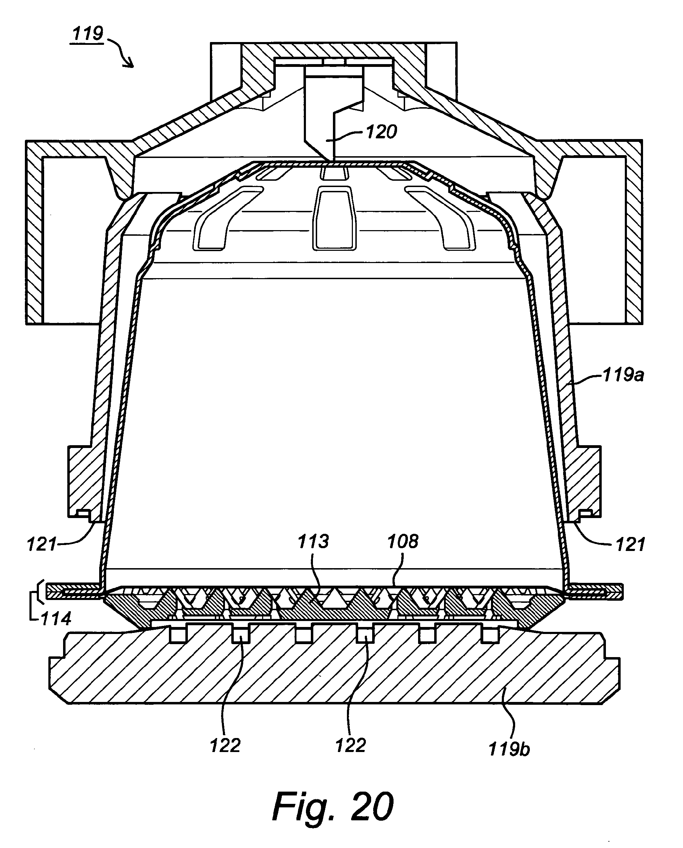

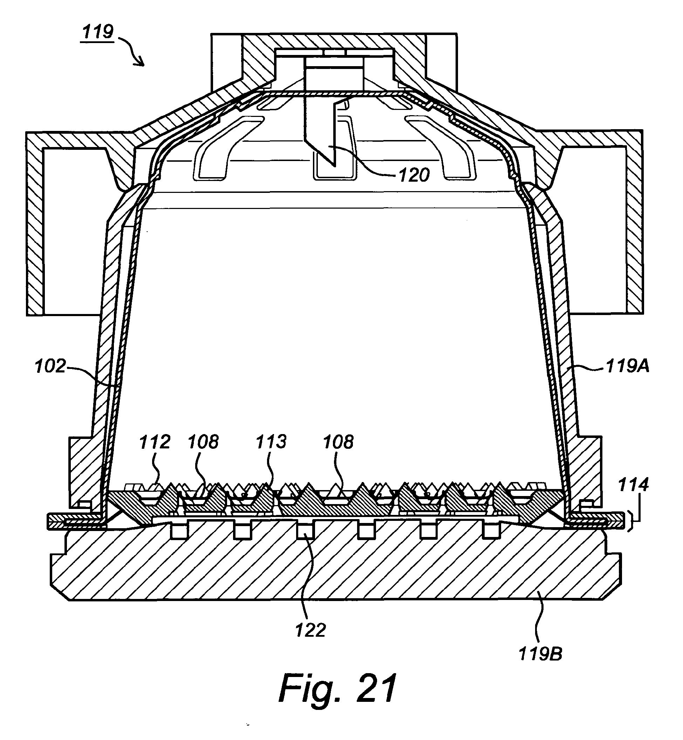

Figures 20 and 21 show cross-sections of a capsule 101 as according to figures 14-19 in a capsule holder 119 of a device for preparing beverages such as a coffee machine, in an opened situation prior to use of capsule 101 (figure 20) and in a closed situation in which the beverage can be prepared (figure 21). Capsule holder 119 here comprises a first holder part 119a and a second holder part 119b displaceable relative to first holder part 119a. First holder part 119a comprises one or more cutting elements 120 for perforating upper wall 103 of capsule 101. First holder part 119a further comprises a clamping edge 121 for pressing engaging edge 114 onto second holder part 119b such that capsule holder 119 is substantially completely sealed, whereby leakage of water can be prevented. Second holder part 119b is provided with one or more discharge openings 122 for beverage. During closing of capsule holder 119 by displacing first holder part 119a and second holder part 119b toward each other the upper wall 103 of capsule 101 will be perforated, engaging edge 114 will be clamped substantially liquid-tightly between the two holder parts 119a, 119b and perforation structure 110 will moreover be pressed into housing 102, whereby foil 108 will be at least partially perforated and discharge of beverage from capsule 101 made possible. The advantage of this pre-perforation, among others, is that a better aeration of capsule 101 is obtained, this generally enhancing both the beverage preparation process and the finally obtained taste of the beverage. Foil 108 will be further perforated by the central perforation elements 113 during the beverage preparation process.

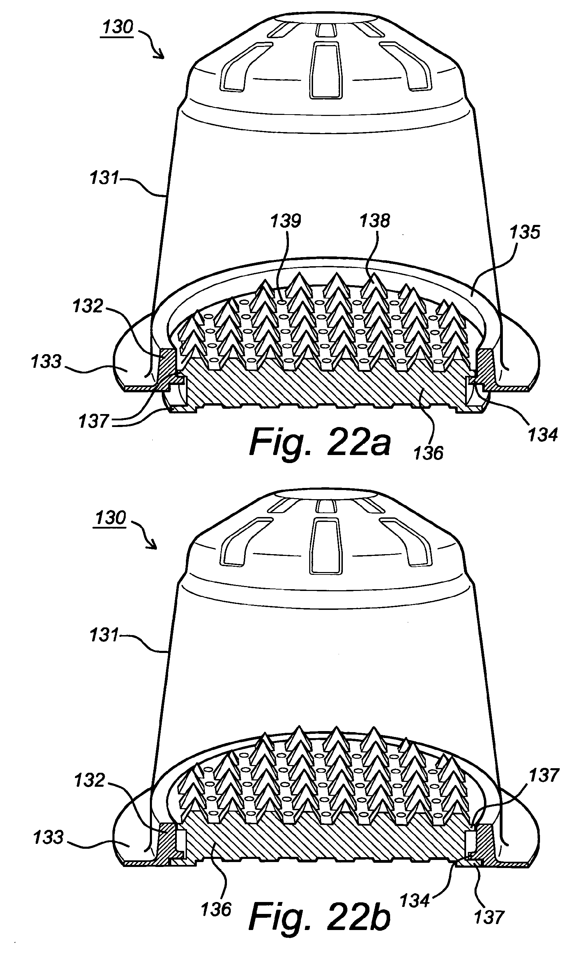

Figures 22a and 22b show cross-sections of a second embodiment of a capsule 130 according to the invention. Capsule 130 comprises a housing 131 and a skirt 132 optionally connected integrally to housing 131 and provided with a protruding flange 133 adapted to enable clamping of capsule 130 in a capsule holder, and with an internal stop edge 134. An upper side 135 of skirt 132 is provided with a perforable foil (not shown). Capsule 130 also comprises perforation structure 136 which is linearly displaceable relative to skirt 132. The displacement is bounded here by two protruding flanges 137. Perforation structure 136 is provided on a side facing toward the foil with a plurality of pyramid-like perforation elements 138 between which throughflow channels 139 are arranged for discharge of beverage. In a lower position (first position) of perforation structure 136 the foil will completely seal the housing (figure 22a). When capsule 130 is clamped into the capsule holder, perforation structure 136 will be pressed to an upper position (second position), whereby the foil will be at least partially perforated.

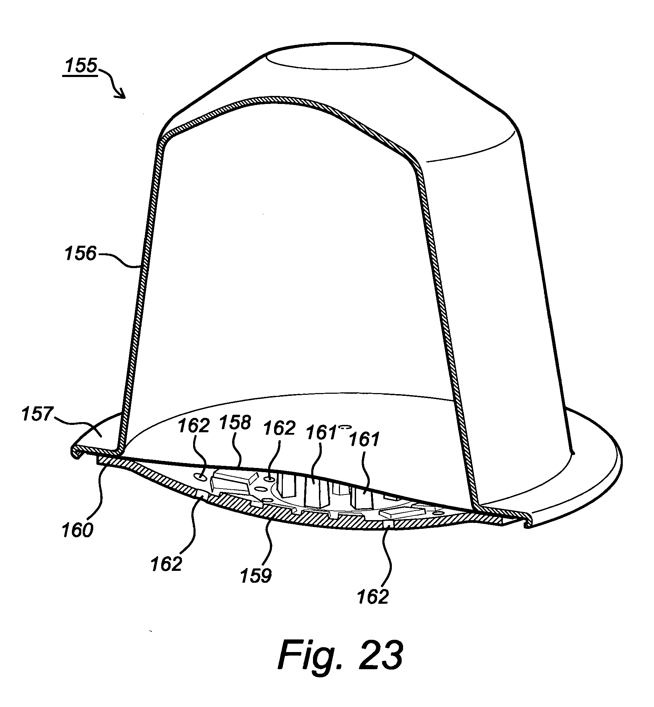

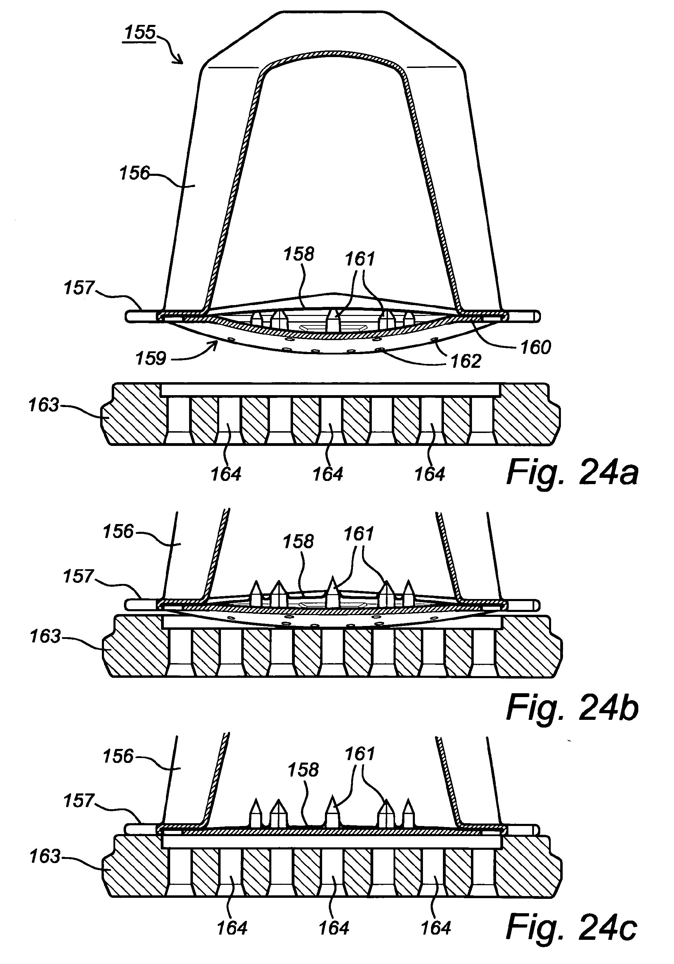

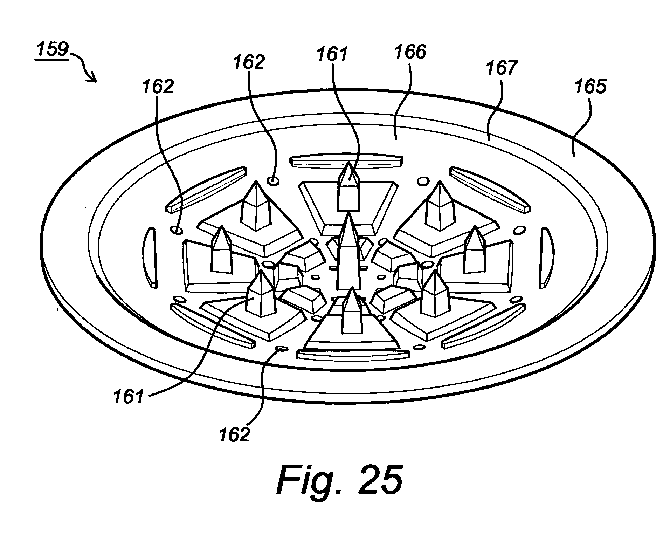

Figure 23 shows a cut-away perspective view of another capsule 155 according to the invention. Capsule 155 comprises a substantially truncated conical (frustoconical) housing 156 in which a substance for extraction is received (not shown). Housing 156 is provided with a laterally protruding edge 157. Edge 157 has the function (among others) of enabling clamping of capsule 155 in a device for preparing beverages. Edge 157 is also used to enable adhesion and/or welding of a foil 158 to housing 156. Capsule 155 further comprises an at least partially flexible piercing element 159 (perforation structure) arranged on a side of foil 158 remote from housing 156. A peripheral edge 160 of piercing element 159 is here also adhered and/or welded to edge 157, optionally with interposing of foil 158. Piercing element 159 comprises a plurality of piercing members 161 directed toward foil 158 and a plurality of throughfeed openings 162 for water. In the shown situation the foil is not pierced. By exerting a force on (a central part of) piercing element 159 in the direction of foil 158 the piercing element 159 will at least partially deform, whereby foil 158 will be perforated. The operation of capsule 155 is further shown in figures 24a-24c, wherein figure 24a further shows that capsule 155 is positioned in the first instance close to a perforated plate 163 provided with throughflow channels 164, perforated plate 163 forming part of a device for preparing beverages. Capsule 155 and perforated plate 163 are then pressed against each other. This can for instance take place by pressing capsule 155 manually against perforated plate 163, but will generally rather take place in practice by mechanical clamping of capsule 155 between perforated plate 163 and a clamping element (not shown) enclosing capsule 155, wherein capsule 155 is engaged particularly on peripheral edge 157. The result of this pressing together is that piercing element 159 will deform (figure 24b) in the direction of foil 158 and will pierce foil 158. Piercing element 159 will here finally come to lie substantially parallel to perforated plate 163 (figure 24c). In this latter situation of capsule 155 an injection pin (not shown) will perforate a supply side of capsule 155, after which water is pressed via the injection pin into capsule 155. The water pressed into capsule 155 will subsequently be discharged via perforated foil 158, throughfeed openings 162 of piercing element 159 and throughflow channels 164 of perforated plate 163, after which the extract-enriched water, generally coffee, is collected in a drinking cup (not shown). Figure 25 is a detailed perspective view of piercing element 159, which clearly shows that piercing element 159 takes a disc-like form. Piercing element 159 in fact comprises a stationary peripheral edge 165 and a deformable central part 166 connected pivotally to peripheral edge 165. The pivotable coupling between the stationary peripheral edge 165 and central part 166 is formed here by a film hinge 167.

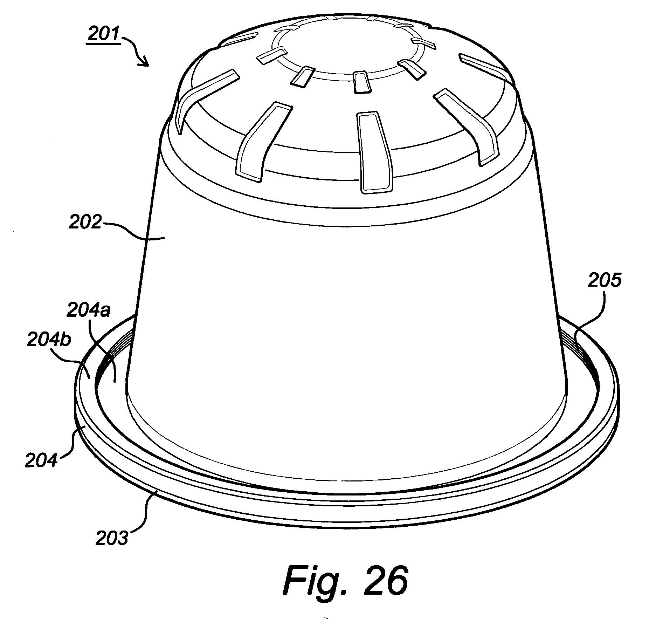

Figure 26 is a perspective view of another capsule 201 according to the invention. Capsule 201 comprises a housing 202 manufactured from PP, a flange 203 connected integrally to housing 202 and manufactured from PP, and a sealing element 204 arranged on flange 203 and connected to the flange by means of a welded connection. Sealing element 204 is manufactured here from a TPO such as Adflex®. Sealing element 204 here comprises a base part 204a lying substantially parallel to flange 203 and also welded to flange 203. In addition, sealing element 204 comprises an upright edge 204b integrally connected to base part 204a. Upright edge 204b is provided on an inner side (i.e. a side facing toward housing 202) with a plurality of flexible sealing edges 205 adapted for sealing engagement on a capsule holder.

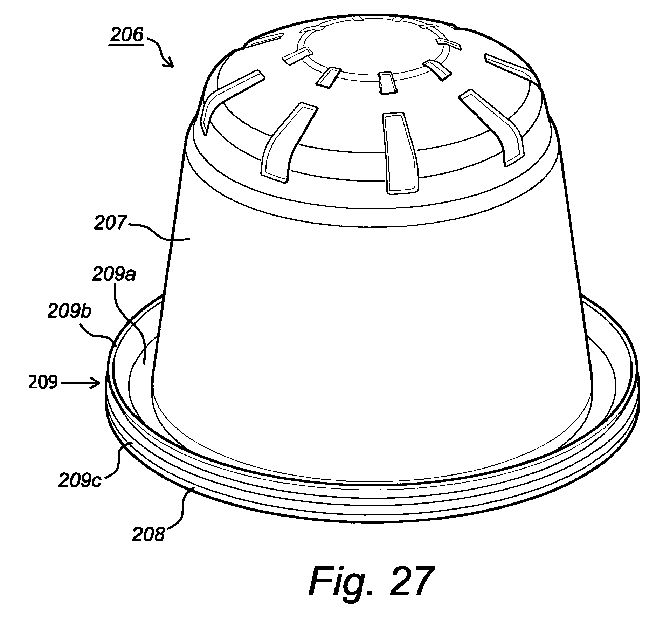

Figure 27 is a perspective view of another capsule 206 according to the invention. Capsule 206 comprises a housing 207 manufactured from PP, a flange 208 connected integrally to housing 207 and manufactured from PP, and a sealing element 209 arranged on flange 208 and connected to the flange by means of a welded connection. Sealing element 209 is manufactured here from a TPO such as Adflex®. Sealing element 209 here comprises a base part 209a lying substantially parallel to flange 208 and also welded to flange 208. In addition, sealing element 209 comprises an upright edge 209b integrally connected to base part 209a at a distance from a peripheral edge 209c of base part 209a. Upright edge 209b is adapted, just as peripheral edge 209c of base part 209a, for sealing engagement on a capsule holder.

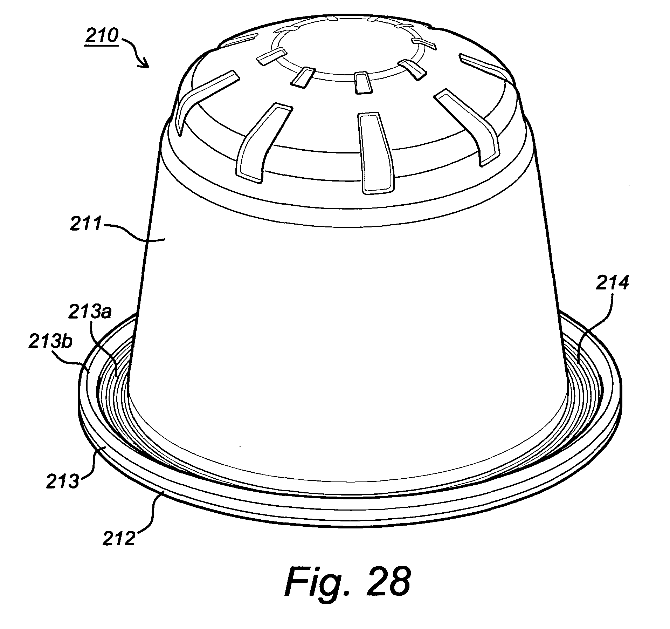

Figure 28 is a perspective view of another capsule 210 according to the invention. Capsule 210 comprises a housing 211 manufactured from PP, a flange 212 connected integrally to housing 211 and manufactured from PP, and a sealing element 213 arranged on flange 212 and connected to the flange by means of a welded connection. Sealing element 213 is manufactured here from a TPO such as Adflex®. Sealing element 213 here comprises a base part 213a lying substantially parallel to flange 212 and also welded to flange 212. In addition, sealing element 213 comprises an upright edge 213b integrally connected to base part 213a. Base part 213a is provided with a plurality of concentric, upright sealing ribs 214 adapted for sealing engagement on a capsule holder.

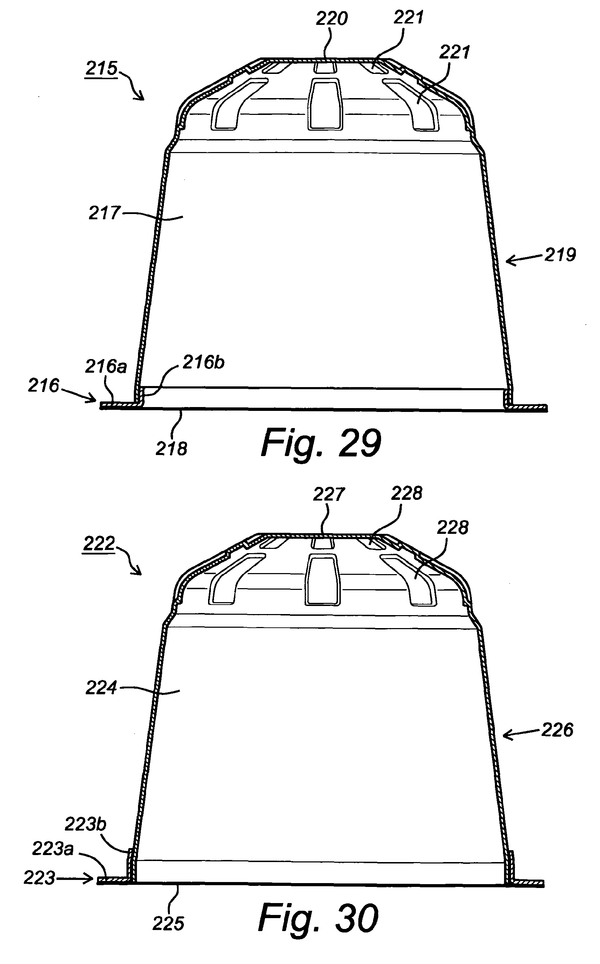

Figure 29 shows a cross-section of yet another capsule 215 according to the invention. Capsule 215 comprises a base structure 216 and a housing 217 arranged on base structure 216. Base structure 216 takes an annular form and comprises a laterally protruding flange 216a and an upright edge 216b integrally connected to flange 216a. Edge 216b is here enclosed by housing 217. Housing 217 is connected, preferably by means of a welded connection, to both flange 216a and edge 216b. A side of flange 216a remote from housing 217 is connected, preferably by means of a welded connection, to a perforable foil 218. Housing 217 is at least partially filled with an extractable and/or soluble substance for enriching a beverage. Flange 216a is adapted to be clamped by a capsule holder, wherein a seal is realized in that the base structure 216 is manufactured from a TPO such as Adflex®. Housing 217 is manufactured in this exemplary embodiment from plastic, in particular PP. Housing 217 can optionally take a flexible, particularly limp form in that housing 217 is supported by base structure 216a and therefore need not have any self-supporting capacity as such. Foil 218 is manufactured from a laminate of aluminium and plastic, in particular PP, wherein a plastic layer of the foil 218 lies against and is connected to plastic flange 216a. Housing 217 comprises a peripheral wall 219 and a top wall 220 integrally connected to peripheral wall 219, top wall 220 being deemed as supply side of capsule 215. Further shown is that housing 217 is provided with a plurality of strengthening recesses 221 arranged in the peripheral wall 219 as well as the top wall 220 of housing 217.

Figure 30 shows a cross-section of yet another capsule 222 according to the invention. Capsule 222 comprises a base structure 223 and a housing 224 connected to base structure 223. Base structure 223 takes an annular form and comprises a laterally protruding flange 223a and an upright edge 223b integrally connected to flange 223a. Edge 223b connects here to an outer side of housing 224. Housing 224 is connected, preferably by means of a welded connection, to both flange 223a and edge 223b. A side of flange 223a remote from housing 224 is connected, preferably by means of a welded connection, to a perforable foil 225. Housing 224 is at least partially filled with an extractable and/or soluble substance for enriching a beverage. Flange 223a is adapted to be clamped by a capsule holder, wherein an advantageous multilateral seal is realized between capsule 222 and a capsule holder in that the base structure 223 is manufactured from a sealing material, in particular a TPO such as Adflex®. It is also possible in this exemplary embodiment to envisage another type of sealing material being applied, such as a plastically deformable material or a rubber-elastic material. Housing 224 is manufactured in this exemplary embodiment from plastic, in particular PP. Foil 225 is manufactured from a laminate of aluminium and plastic, in particular PP, wherein a plastic layer of the foil 225 lies against and is connected to plastic flange 223a. Housing 224 comprises a peripheral wall 226 and a top wall 227 integrally connected to peripheral wall 226, top wall 227 being deemed as supply side of capsule 222. Further shown is that housing 224 is provided with a plurality of recessed strengthening recesses 228 arranged in the peripheral wall 226 as well as the top wall 227 of housing 224.

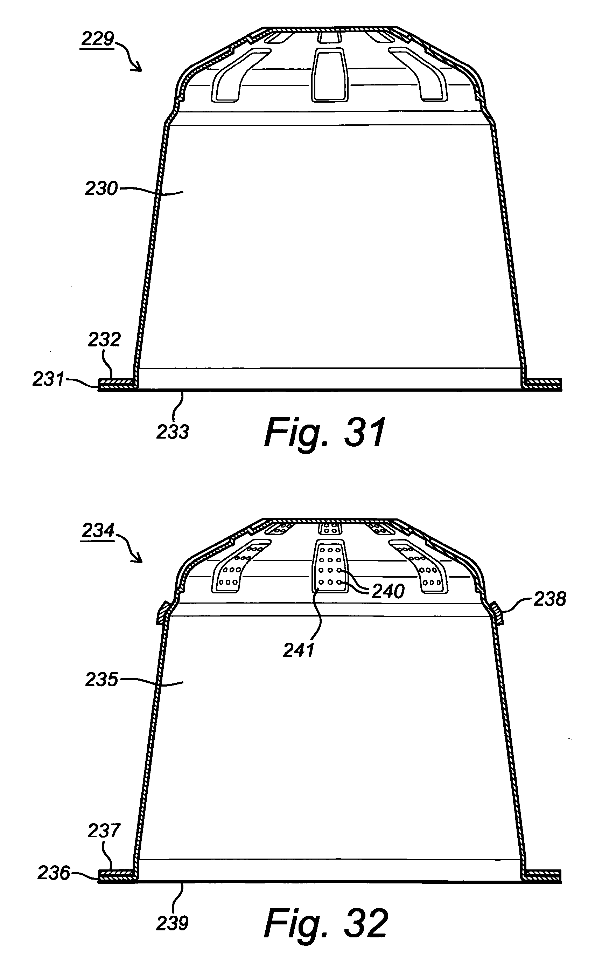

Figure 31 shows a cross-section of yet another capsule 229 according to the invention. Capsule 229 comprises a housing 230 and a laterally protruding flange 231 integrally connected to housing 230. An upper side of flange 231 is provided with a preferably annular sealing element 232 covering at least a part of the flange surface. Sealing element 232 is manufactured here from a TPO. An underside of flange 231 is connected to a perforable foil 233. This foil 233 will generally be perforated in a capsule holder of a device for preparing beverages as a result of pressure buildup in capsule 229 as a consequence of injection of water (and air) into capsule 229. The laminate of sealing element 232, flange 231 and foil 233 can be deemed as engaging edge which is clamped as such in the capsule holder during use of capsule 229.

Figure 32 shows a cross-section of yet another capsule 234 according to the invention. Capsule 234 comprises a housing 235 and a laterally protruding flange 236 integrally connected to housing 235. An upper side of flange 236 is provided with a preferably annular first sealing element 237 covering at least a part of the flange surface. Sealing element 237 is manufactured here from a TPO, such as Adflex®. An outer side of housing 235 is provided with an annular second sealing element 238 which is preferably also manufactured from a TPO for the purpose of realizing a further sealing of capsule 234 in a capsule holder. An underside of flange 236 is connected to a perforable foil 239. This foil 239 will generally be perforated in a capsule holder of a device for preparing beverages as a result of pressure buildup in capsule 234 as a consequence of pressing water (and air) into capsule 234. The laminate of first sealing element 237, flange 236 and foil 239 can be deemed as engaging edge which is clamped as such in the capsule holder during use of capsule 234. A further particular is that the housing is at least partially provided with perforations 240 for guiding water (and air) in housing 235. These perforations 240 are generally positioned above the highest oriented sealing element 238 of capsule 234 (wherein foil 239 is deemed as lowest lying part of capsule 234). In the shown figure the housing 235 is provided with strengthening elements 241 in which the perforations 240 are arranged. Perforations 240 can however also be positioned a distance from strengthening elements 241, wherein strengthening elements 241 can optionally be omitted. Since perforation of housing 235 of capsule 234 is not essential in this exemplary embodiment, it is possible to envisage, and in some situations also advantageous, to give capsule 234 (small) dimensions such that the cutting means generally forming part of the capsule holder do not make contact with, or at least do not perforate the housing 235 when capsule 234 is clamped in the capsule holder.

It will be apparent that the invention is not limited to the exemplary embodiments shown and described here, but that within the scope of the appended claims numerous variants are possible which will be self-evident to the skilled person in the field.

## Claims

1. Capsule for preparing beverages, comprising:
- a housing at least partially filled with a substance to be extracted and/or dissolved, such as ground coffee, wherein the housing is at least partially manufactured from polypropylene, and is provided with a supply side for pressing a liquid such as water into the capsule, and with a discharge side located a distance from supply side for discharging liquid provided with extract and/or dissolved substance and guided through the capsule, wherein at least a part of the discharge side of the housing is initially sealed by a perforable foil;
- a laterally protruding engaging edge comprising a flange integrally connected to the housing to enable clamping of the capsule in a device for preparing beverages; and
- at least one at least partially resilient sealing element for sealing a space between the device and the capsule during clamping of the capsule in the device,
**characterized in that** the sealing element comprises thermoplastic polypropylene, **that** the foil is at least partially manufactured from polypropylene and **in that** both the sealing element and the foil are welded onto the flange

2. Capsule as claimed in claim 1, wherein the sealing element comprises a composition of polyolefins, the composition comprising: a polypropylene and an elastomeric copolymer comprising units of ethylene and units of an α-olefin.

3. Capsule as claimed in claim 2, wherein the α -olefin is formed by ethylene, propylene or 1-butene.

4. Capsule as claimed in any of the foregoing claims, wherein the sealing element is locked by applying at least one locking protrusion forming part of the capsule.

5. Capsule as claimed in any of the foregoing claims, wherein the capsule comprises a perforation structure coupled substantially rigidly to the engaging edge and/or the housing, which perforation structure is provided with at least one perforation element facing toward the foil for perforating the foil, and which perforation structure is positioned substantially on a side of the foil remote from the housing, wherein perforation of the foil is caused by deformation of the foil during pressing of the liquid through the capsule.

6. Capsule as claimed in claim 5, wherein the perforation structure is positioned at least partially in a volume enclosed by the housing.

7. Capsule as claimed in any of the claims 1-6, wherein the capsule comprises a perforation structure coupled to the engaging edge and/or the housing and provided with at least one perforation element facing toward the foil, which perforation structure is positioned substantially on a side of the foil remote from the housing, which perforation structure is displaceable from a first position, in which the foil is substantially intact, to a second position in which the at least one perforation element perforates the foil, whereby discharge of liquid from the capsule is possible.

8. Capsule as claimed in claim 7, wherein the perforation structure is initially connected in the first position via at least one breakable connection to the engaging edge, wherein the perforation structure is displaceable to the second position by breaking the connection between the perforation structure and the engaging edge.

9. Capsule as claimed in claim 7, wherein the perforation structure is initially positioned such that the connection between the engaging edge and the perforation structure will be broken during clamping of the capsule in the device.

10. Capsule as claimed in any of the foregoing claims, wherein the capsule comprises a plurality of sealing elements, wherein at least one sealing element is at least partly manufactured from a thermoplastic polyolefin (TPO).

11. Capsule as claimed in claim 10, wherein the sealing elements are positioned at a mutual distance.

12. Assembly of a capsule as claimed in any of the foregoing claims and a device for preparing beverages, which device comprises a capsule holder for receiving the capsule.

13. Assembly as claimed in claim 12, wherein the capsule holder comprises a plurality of holder parts which are mutually displaceable between an opened position, in which the capsule can be placed in the capsule holder, and a closed position in which the engaging edge of the capsule is clamped substantially liquid-tightly by the holder parts.

14. Use of a capsule as claimed in any of the claims 1-11 in a device for preparing beverages.

15. Sealing element evidently intended for use in a capsule as claimed in any of the claims 1-11.

## Patentansprüche

1. Kapsel zur Herstellung von Getränken, umfassend:
- ein Gehäuse, das mindestens teilweise mit einem zu extrahierenden und/oder lösenden Stoff wie gemahlenem Kaffee gefüllt ist, wobei das Gehäuse mindestens teilweise aus Polypropylen gefertigt ist und mit einer Zufuhrseite zum Pressen einer Flüssigkeit wie Wasser in die Kapsel und mit einer Abgabeseite versehen ist, die in einem Abstand von der Zufuhrseite zur Abgabe von Flüssigkeit angeordnet ist, die mit Extrakt und/oder gelöstem Stoff versehen ist und durch die Kapsel geführt wird, wobei mindestens ein Teil der Abgabeseite des Gehäuses anfänglich durch eine perforierbare Folie versiegelt ist;
- eine seitlich hervorstehende Eingriffskante, die einen Flansch umfasst, der mit dem Gehäuse einstückig verbunden ist, um das Klemmen der Kapsel in einer Vorrichtung zur Herstellung von Getränken zu ermöglichen; und
- mindestens ein mindestens teilweise elastisches Versiegelungselement zum Versiegeln eines Raums zwischen der Vorrichtung und der Kapsel während des Klemmens der Kapsel in der Vorrichtung,
**dadurch gekennzeichnet, dass** das Versiegelungselement ein thermoplastisches Polypropylen umfasst, dass die Folie mindestens teilweise aus Polypropylen gefertigt ist und dadurch, dass sowohl das Versiegelungselement als auch die Folie an den Flansch geschweißt sind.

2. Kapsel nach Anspruch 1, wobei das Versiegelungselement eine Zusammensetzung von Polyolefinen umfasst, wobei die Zusammensetzung Folgendes umfasst: ein Polypropylen und ein elastomeres Copolymer, das Einheiten von Ethylen und Einheiten eines α-Olefins umfasst.

3. Kapsel nach Anspruch 2, wobei das α-Olefin durch Ethylen, Propylen oder 1-Buten gebildet ist.

4. Kapsel nach einem der vorhergehenden Ansprüche, wobei das Versiegelungselement durch Betätigen mindestens eines Verriegelungsvorsprungs, der Teil der Kapsel ist, verriegelt wird.

5. Kapsel nach einem der vorhergehenden Ansprüche, wobei die Kapsel eine Perforationsstruktur umfasst, die im Wesentlichen starr mit der Eingriffskante und/oder dem Gehäuse gekoppelt ist, wobei die Perforationsstruktur mit mindestens einem Perforationselement versehen ist, das zu der Folie zum Perforieren der Folie weist, und wobei die Perforationsstruktur im Wesentlichen auf einer Seite der Folie entfernt von dem Gehäuse angeordnet ist, wobei die Perforation der Folie durch Verformung der Folie während des Pressens von Flüssigkeit durch die Kapsel bewirkt wird.

6. Kapsel nach Anspruch 5, wobei die Perforationsstruktur mindestens teilweise in einem Volumen angeordnet ist, das von dem Gehäuse eingeschlossen ist.

7. Kapsel nach einem der Ansprüche 1 bis 6, wobei die Kapsel eine Perforationsstruktur umfasst, die mit der Eingriffskante und/oder dem Gehäuse gekoppelt ist und mit mindestens einem Perforationselement versehen ist, das zu der Folie weist, wobei die Perforationsstruktur im Wesentlichen auf einer Seite der Folie entfernt von dem Gehäuse angeordnet ist, wobei die Perforationsstruktur von einer ersten Position, in der die Folie im Wesentlichen unversehrt ist, in eine zweite Position verschiebbar ist, in der das mindestens eine Perforationselement die Folie perforiert, wodurch die Abgabe von Flüssigkeit aus der Kapsel möglich ist.

8. Kapsel nach Anspruch 7, wobei die Perforationsstruktur anfänglich über mindestens eine zerbrechliche Verbindung mit der Eingriffskante in der ersten Position verbunden ist, wobei die Perforationsstruktur in die zweite Position verschiebbar ist, indem die Verbindung zwischen der Perforationsstruktur und der Eingriffskante zerbrochen wird.

9. Kapsel nach Anspruch 7, wobei die Perforationsstruktur anfänglich derart angeordnet ist, dass die Verbindung zwischen der Eingriffskante und der Perforationsstruktur während des Klemmens der Kapsel in der Vorrichtung zerbrochen wird.

10. Kapsel nach einem der vorhergehenden Ansprüche, wobei die Kapsel mehrere Versiegelungselemente umfasst, wobei mindestens ein Versiegelungselement mindestens teilweise aus einem thermoplastischen Polyolefin (TPO) gefertigt ist.

11. Kapsel nach Anspruch 10, wobei die Versiegelungselemente in einem Abstand zueinander angeordnet sind.

12. Kapsel nach einem der vorhergehenden Ansprüche und Vorrichtung zur Herstellung von Getränken, wobei die Vorrichtung einen Kapselhalter zum Aufnehmen der Kapsel umfasst.

13. Anordnung nach Anspruch 12, wobei der Kapselhalter mehrere Halterteile umfasst, die zueinander zwischen einer geöffneten Position, in der die Kapsel in dem Kapselhalter angeordnet werden kann, und einer geschlossenen Position verschiebbar sind, in der die Eingriffskante der Kapsel im Wesentlichen flüssigkeitsdicht von den Halterteilen eingeklemmt wird.

14. Verwendung einer Kapsel nach einem der Ansprüche 1 bis 11 in einer Vorrichtung zur Herstellung von Getränken.

15. Versiegelungselement, das nachweislich zur Verwendung in einer Kapsel nach einem der Ansprüche 1 bis 11 vorgesehen ist.

## Revendications

1. Capsule pour préparer des boissons, comprenant:
- un boîtier au moins partiellement rempli d'une substance à extraire et/ou à dissoudre, telle que du café moulu, dans laquelle le boîtier est au moins partiellement fabriqué à partir de polypropylène et présente un côté d'alimentation pour presser un liquide tel que l'eau dans la capsule, et un côté de décharge situé à une distance du côté d'alimentation pour décharger un liquide chargé de la substance extraite et/ou dissoute et guidé à travers la capsule, dans laquelle au moins une partie du côté de décharge du boîtier est initialement obturée par un film à perforer;
- un bord d'engagement saillant latéralement comprenant une collerette connectée de façon intégrale au boîtier de manière à permettre le serrage de la capsule dans un dispositif pour préparer des boissons; et
- au moins un élément d'étanchéité au moins partiellement élastique pour isoler un espace entre le dispositif et la capsule pendant le serrage de la capsule dans le dispositif,
**caractérisée en ce que** l'élément d'étanchéité comprend du polypropylène thermoplastique, **en ce que** le film est au moins partiellement fabriqué à partir de polypropylène, et **en ce que** l'élément d'étanchéité et le film sont tous les deux soudés sur la collerette.

2. Capsule selon la revendication 1, dans laquelle l'élément d'étanchéité comprend une composition de polyoléfines, la composition comprenant un polypropylène et un copolymère élastomère comprenant des unités d'éthylène et des unités d'une alpha-oléfine.

3. Capsule selon la revendication 2, dans laquelle l'alpha-oléfine est constituée d'éthylène, de propylène ou de 1-butène.

4. Capsule selon l'une quelconque des revendications précédentes, dans laquelle l'élément d'étanchéité est verrouillé en appliquant au moins une saillie de verrouillage qui fait partie de la capsule.

5. Capsule selon l'une quelconque des revendications précédentes, dans laquelle la capsule comprend une structure de perforation qui est couplée d'une façon sensiblement rigide au bord d'engagement et/ou au boîtier, ladite structure de perforation étant pourvue d'au moins un élément de perforation tourné face au film pour perforer le film, et ladite structure de perforation étant positionnée sensiblement sur un côté du film à distance du boîtier, dans laquelle la perforation du film est causée par une déformation du film pendant le pressage du liquide à travers la capsule.

6. Capsule selon la revendication 5, dans laquelle la structure de perforation est positionnée au moins partiellement dans un volume délimité par le boîtier.

7. Capsule selon l'une quelconque des revendications 1 à 6, dans laquelle la capsule comprend une structure de perforation qui est couplée au bord d'engagement et/ou au boîtier et qui est pourvue d'au moins un élément de perforation tourné face au film, ladite structure de perforation étant positionnée sensiblement sur un côté du film à distance du boîtier, ladite structure de perforation étant déplaçable à partir d'une première position, dans laquelle le film est sensiblement intact, vers une deuxième position, dans laquelle ledit au moins un élément de perforation perfore le film, moyennant quoi une décharge de liquide à partir de la capsule est possible.

8. Capsule selon la revendication 7, dans laquelle la structure de perforation est initialement connectée dans la première position par l'intermédiaire d'au moins une connexion cassable au bord d'engagement, dans laquelle la structure de perforation est déplaçable vers la deuxième position en cassant la connexion entre la structure de perforation et le bord d'engagement.

9. Capsule selon la revendication 7, dans laquelle la structure de perforation est initialement positionnée de telle sorte que la connexion entre le bord d'engagement et la structure de perforation sera cassée pendant le serrage de la capsule dans le dispositif.

10. Capsule selon l'une quelconque des revendications précédentes, dans laquelle la capsule comprend une pluralité d'éléments d'étanchéité, dans laquelle au moins un élément d'étanchéité est au moins partiellement fabriqué à partir d'une polyoléfine thermoplastique (TPO).

11. Capsule selon la revendication 10, dans laquelle les éléments d'étanchéité sont positionnés à une distance mutuelle.

12. Ensemble d'une capsule selon l'une quelconque des revendications précédentes et d'un dispositif pour préparer des boissons, ledit dispositif comprenant un support de capsule pour recevoir la capsule.

13. Ensemble selon la revendication 12, dans lequel le support de capsule comprend une pluralité de parties de support qui sont mutuellement déplaçables entre une position ouverte, dans laquelle la capsule peut être placée dans le support de capsule, et une position fermée, dans laquelle le bord d'engagement de la capsule est serré d'une façon sensiblement étanche au liquide par les parties de support.

14. Utilisation d'une capsule selon l'une quelconque des revendications 1 à 11 dans un dispositif pour préparer des boissons.

15. Elément d'étanchéité manifestement destiné à une utilisation dans une capsule selon l'une quelconque des revendications 1 à 11.
